# EUROPEAN PATENT APPLICATION

(11) **EP 4 601 283 A1**
(43) Date of publication of application: **13.08.2025**
(21) Application number: 23874654.9
(22) Date of filing: 21.09.2023
(51) Int. Cl.: H04N 5/262, H04N 23/60, H04N 5/222, G06T 7/20, G06T 7/73

(54) **INFORMATION PROCESSING DEVICE AND PROGRAM**

(30) Priority: 05.10.2022 JP 2022160646
(71) Applicant: Sony Group Corporation, Tokyo 108-0075 (JP)
(72) Inventor: SUGIE Yuki, Tokyo 108-0075 (JP)
(74) Representative: D Young & Co LLP
(86) International application number: PCT/JP2023/034199
(87) International publication number: WO 2024/075525

(57) **Abstract**

The present technology relates to an information processing device and a program that enable more efficient video production.

The information processing device includes an association unit that associates a captured image captured by a camera, pose information of the camera obtained by self-position estimation, and pose reliability of the pose information. The present technology can be applied to a capturing system that captures images as a virtual production.

## Description

### [Technical Field]

The present technology relates to an information processing device and program, and in particular to an information processing device and program that enable more efficient video production.

### [Background Art]

In recent years, methods known as virtual production and LED (Light Emitting Diode) wall virtual production have been known as capturing methods for producing video content such as movies. Virtual production is also known as in-camera VFX (Visual Effects).

In this capturing method, a background video is displayed on a large display installed in a studio, and the performer performs acting in front of the display, allowing the performer and the background to be captured. This allows the performer and staff to visually understand the scene during capturing and judge the acting and the quality of the acting, as well as reducing the editing process after capturing.

In the above-mentioned capturing method, in order to capture a video equivalent to that captured against an actual landscape as the background, the camera position and capturing direction are estimated by self-position estimation, and the background video displayed on the large display is changed according to the estimation result. In particular, the area in the background video that includes the part captured by the camera changes according to the estimation result of the camera position and the like, and such an area is called an inner frustum.

The above-mentioned camera self-position estimation is also used for green screen capturing and general AR (Augmented Reality) video content capturing.

In addition, as a technology related to self-position estimation, a technology has been proposed that calculates the reliability of self-position estimation in a drone and displays a warning or controls flight according to the reliability (see, for example, PTL 1). Furthermore, a technology has been proposed that transmits a rescue signal to another user's wearable device in order to correct the self-position when the reliability of the wearable device's self-position estimation decreases while the user is watching content while wearing the wearable device on their head (see, for example, PTL 2).

### [Citation List]

### [Patent Literatures]

[PTL 1]
   JP 2022-12173A
[PTL 2]
   WO 2021/176947

### [Summary]

### [Technical Problem]

However, the above-mentioned technology did not take into account its application to the video content capturing or post-production editing following capturing.

The present technology has been made in view of such circumstances, aiming to enable more efficient video production.

### [Solution to Problem]

An information processing device of the first aspect of the present technology includes an association unit that associates a captured image captured by a camera, pose information of the camera obtained by self-position estimation, and pose reliability of the pose information.

A program of the first aspect of the present technology includes the step of associating a captured image captured by a camera, pose information of the camera obtained by self-position estimation, and pose reliability of the pose information.

In the first aspect of the present technology, a captured image captured by a camera, pose information of the camera obtained by self-position estimation, and pose reliability of the pose information are associated with each other.

An information processing device according to a second aspect of the present technology includes a control unit that performs processing based on a captured image captured by a camera, pose information of the camera obtained by self-position estimation, and pose reliability of the pose information, which are associated in advance.

A program according to the second aspect of the present technology includes the step of performing processing based on a captured image captured by a camera, pose information of the camera obtained by self-position estimation, and pose reliability of the pose information, which are associated in advance.

In the second aspect of the present technology, processing is performed on the basis of a captured image captured by a camera, pose information of the camera obtained by self-position estimation, and pose reliability of the pose information, which are associated in advance.

### [Brief Description of Drawings]

[Fig. 1]

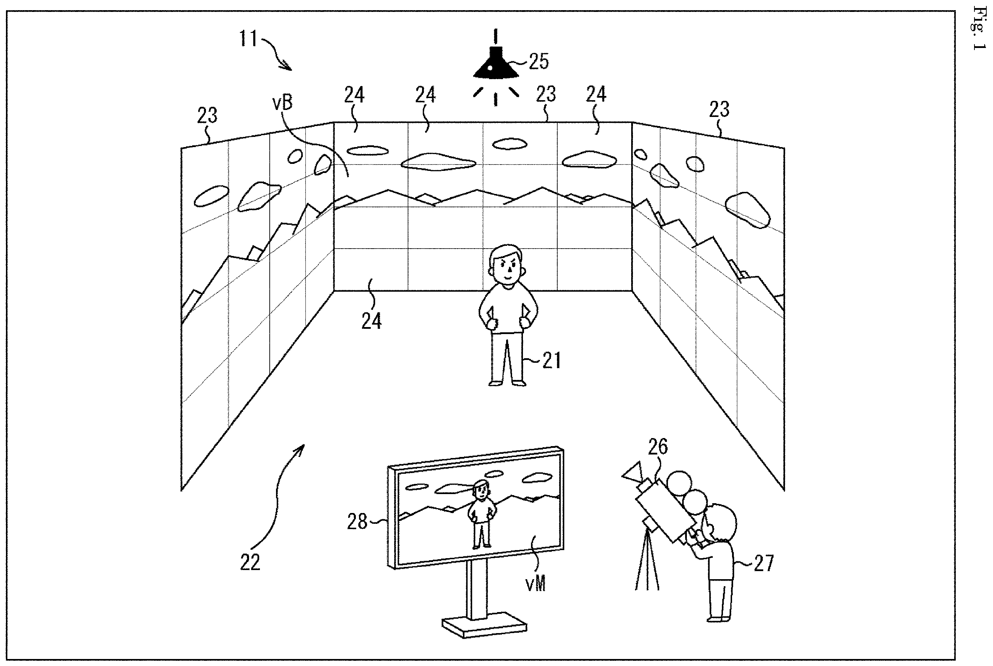

   Fig. 1 is a diagram showing an example of the configuration of a capturing system.
[Fig. 2]

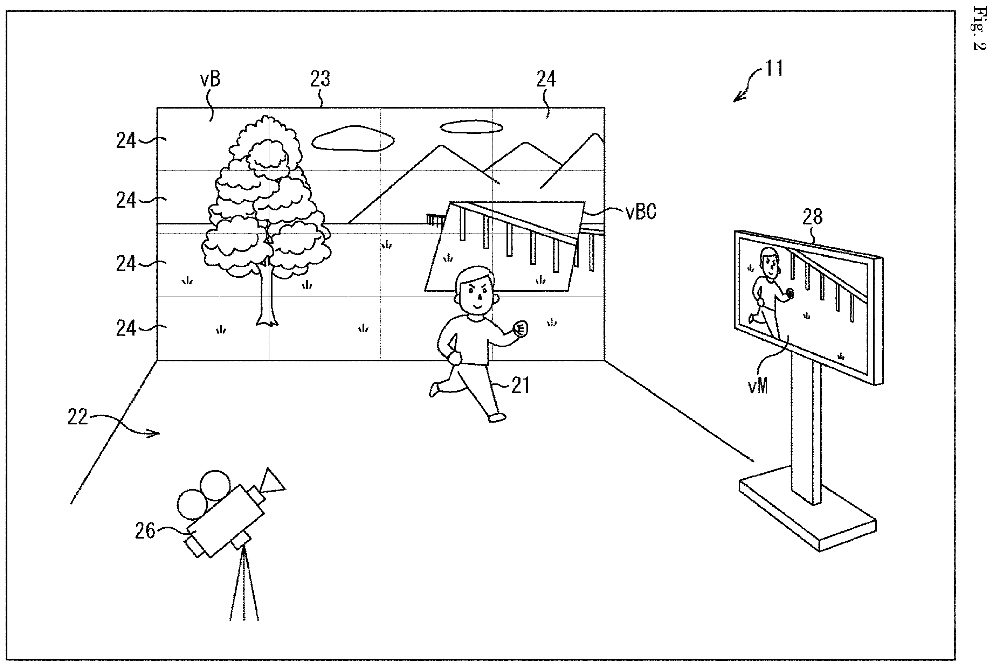

   Fig. 2 is a diagram explaining a background video according to a camera position.
[Fig. 3]

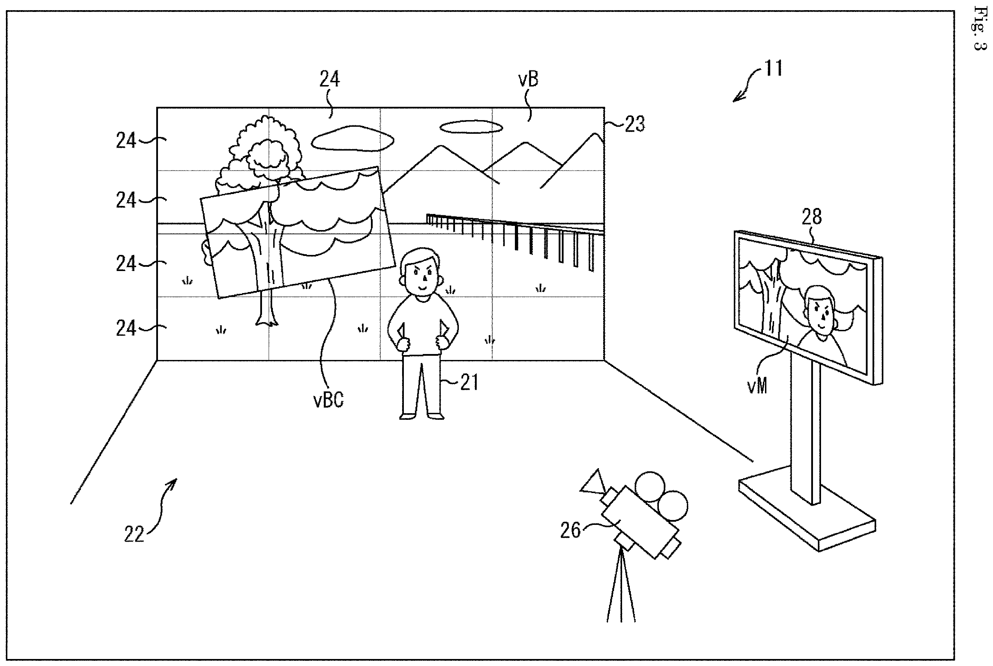

   Fig. 3 is a diagram explaining a background video according to a camera position.
[Fig. 4]

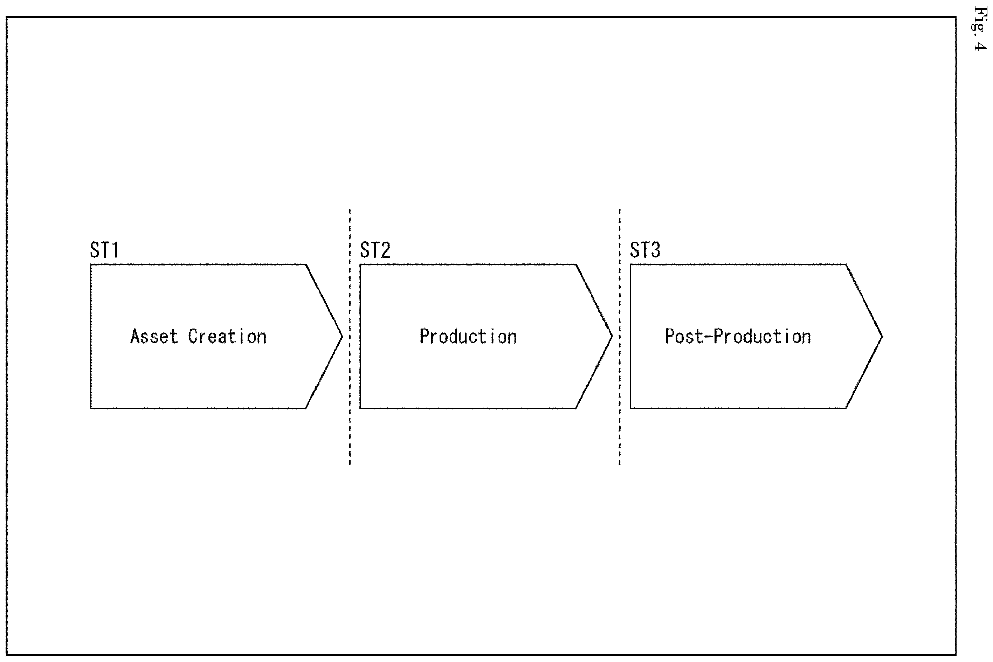

   Fig. 4 is a diagram explaining a video content production process.
[Fig. 5]

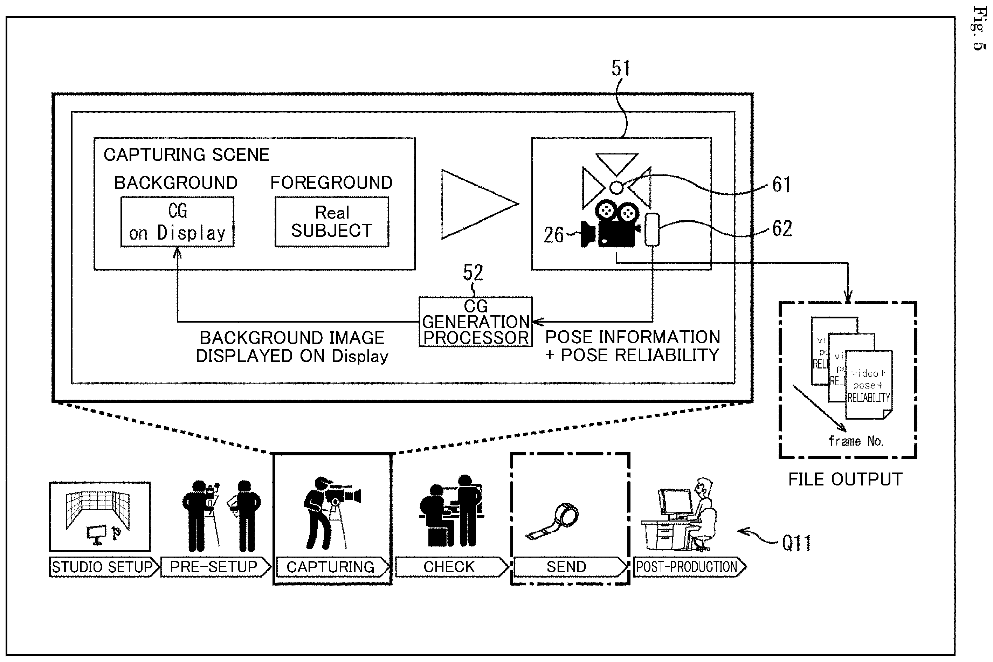

   Fig. 5 is a diagram explaining a configuration of the peripheral parts of a camera in a capturing system.
[Fig. 6]

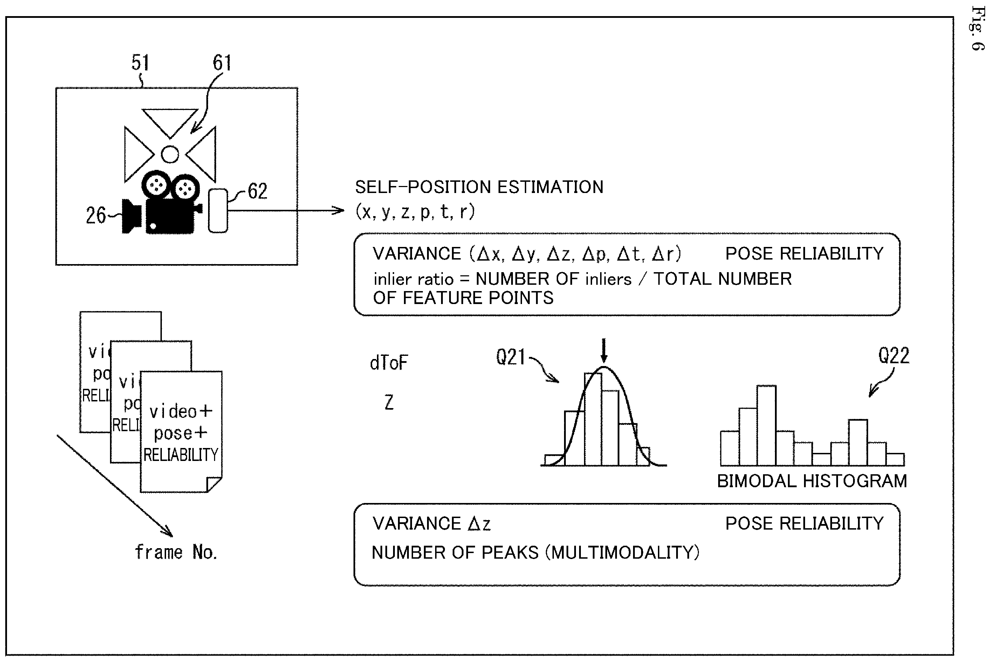

   Fig. 6 is a diagram explaining self-position estimation and pose reliability.
[Fig. 7]

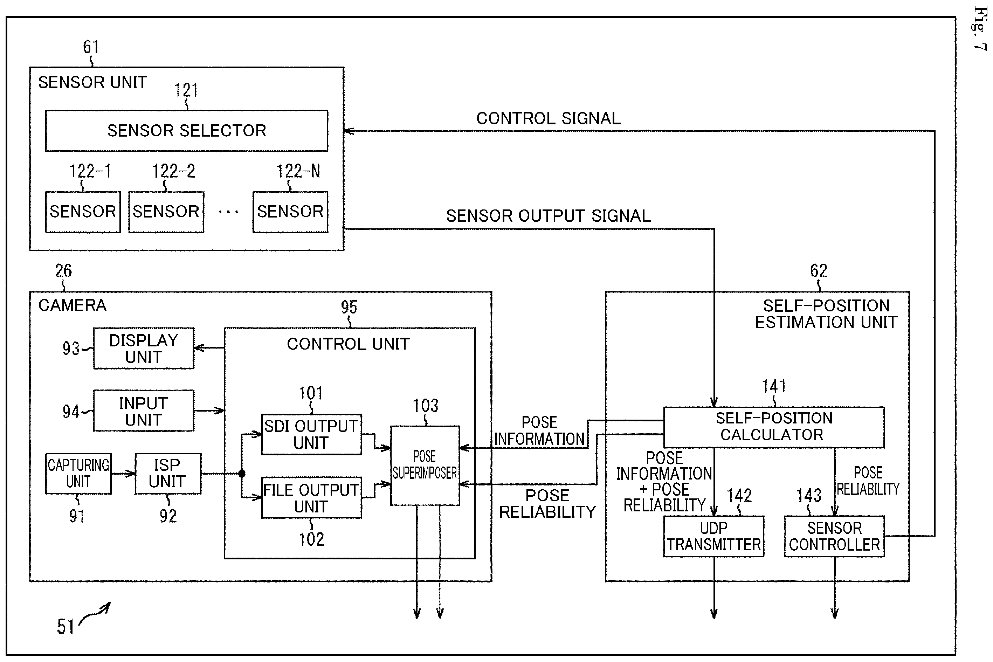

   Fig. 7 is a diagram explaining an example of the configuration of a capturing processor.
[Fig. 8]

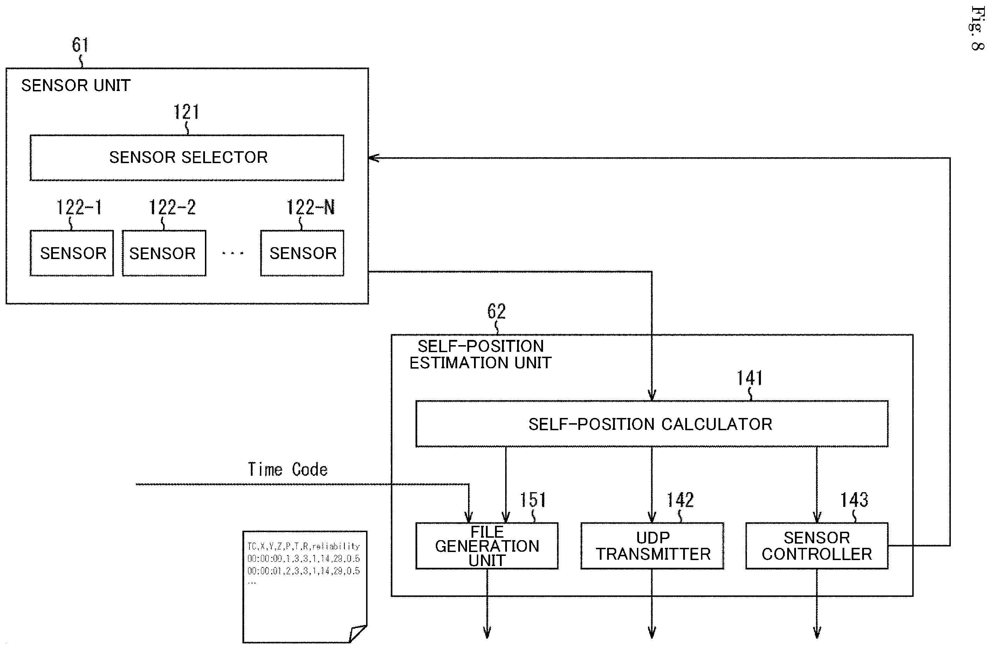

   Fig. 8 is a diagram explaining another example of the configuration of a self-position estimation unit.
[Fig. 9]

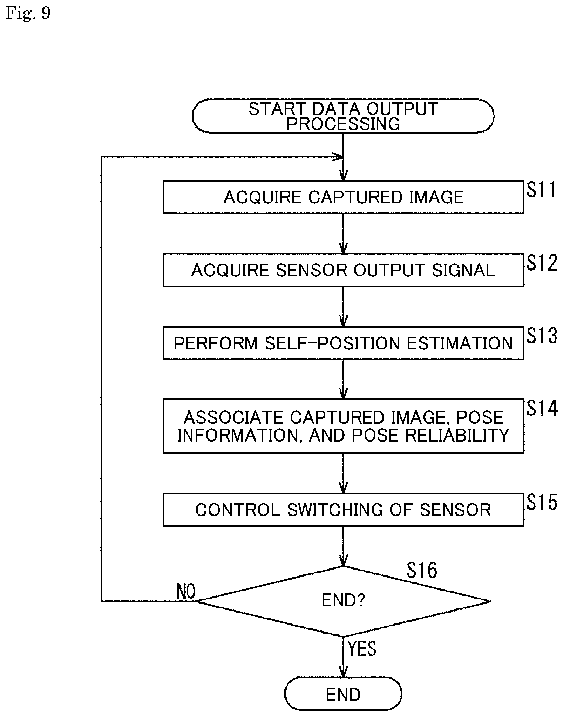

   Fig. 9 is a flowchart explaining data output processing.
[Fig. 10]

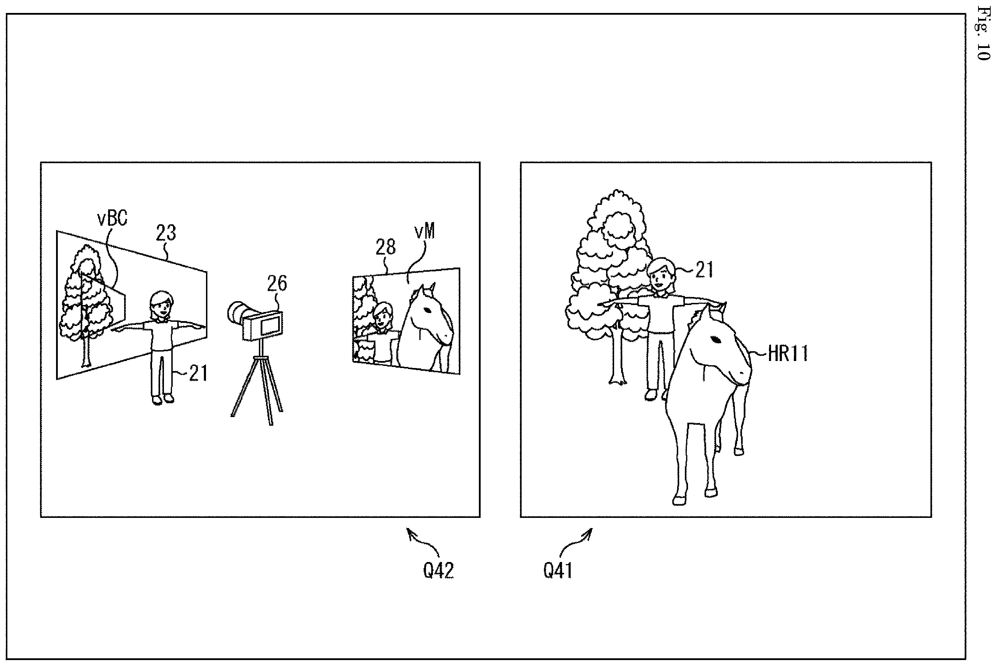

   Fig. 10 is a diagram explaining the compositing of CG videos.
[Fig. 11]

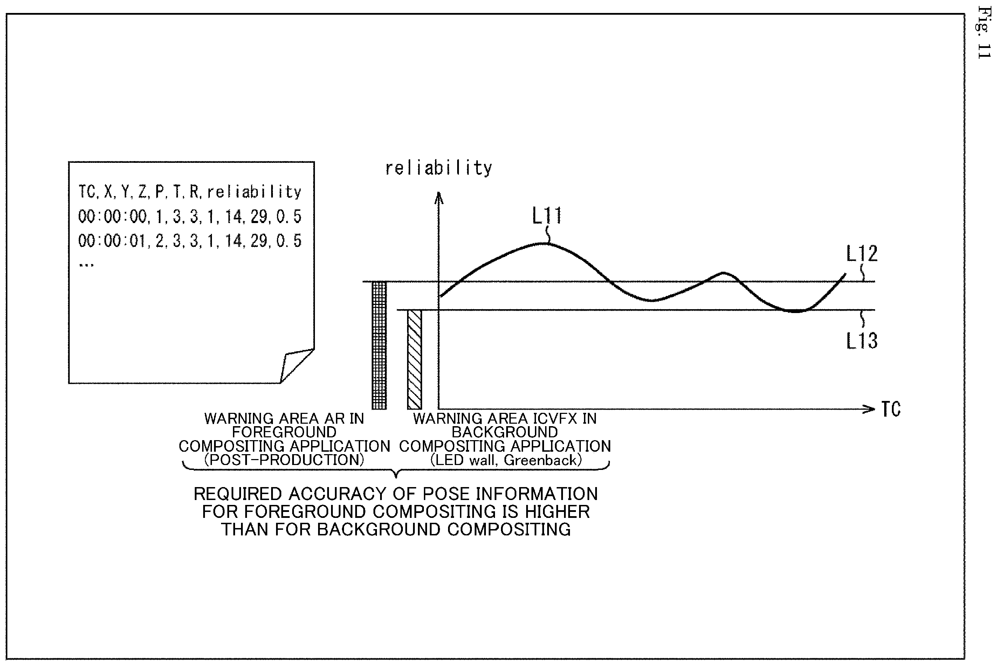

   Fig. 11 is a diagram explaining selection of pose reliability threshold according to an application.
[Fig. 12]

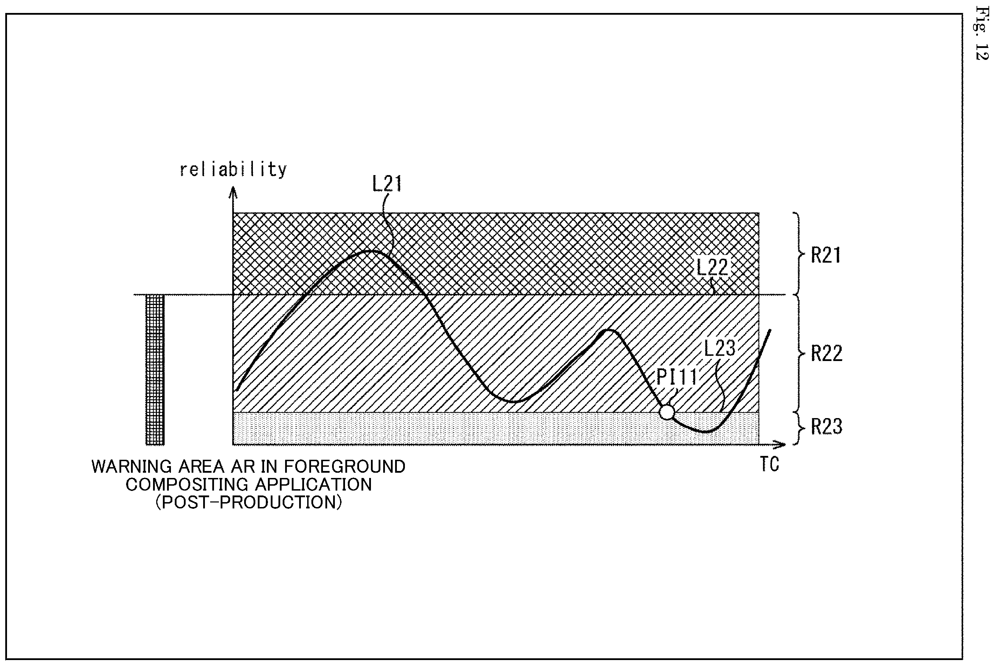

   Fig. 12 is a diagram explaining utilization of pose reliability.
[Fig. 13]

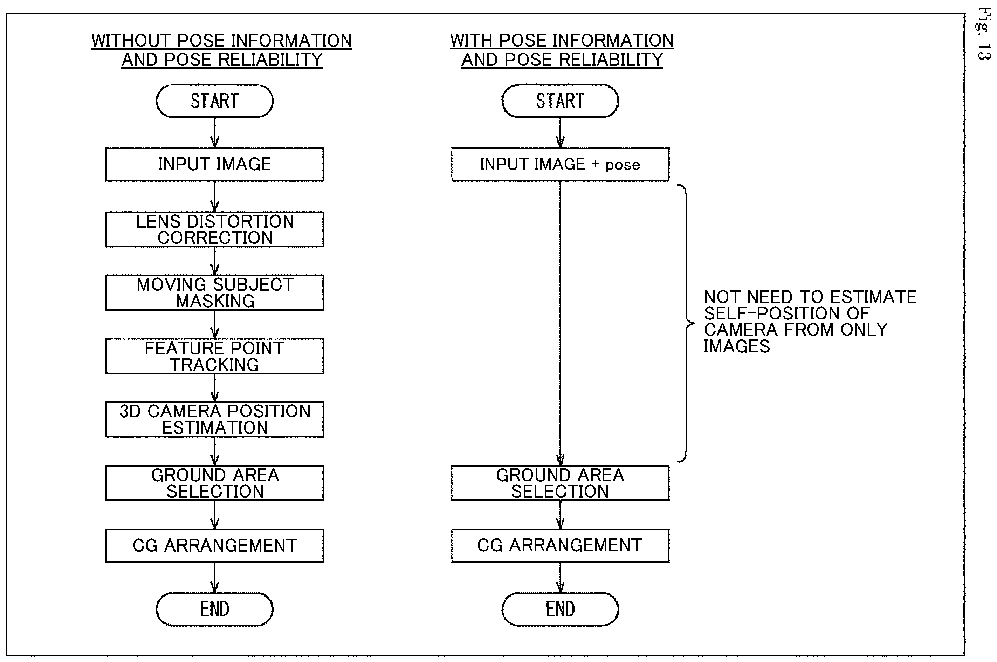

   Fig. 13 is a diagram explaining processing with and without pose information and pose reliability.
[Fig. 14]

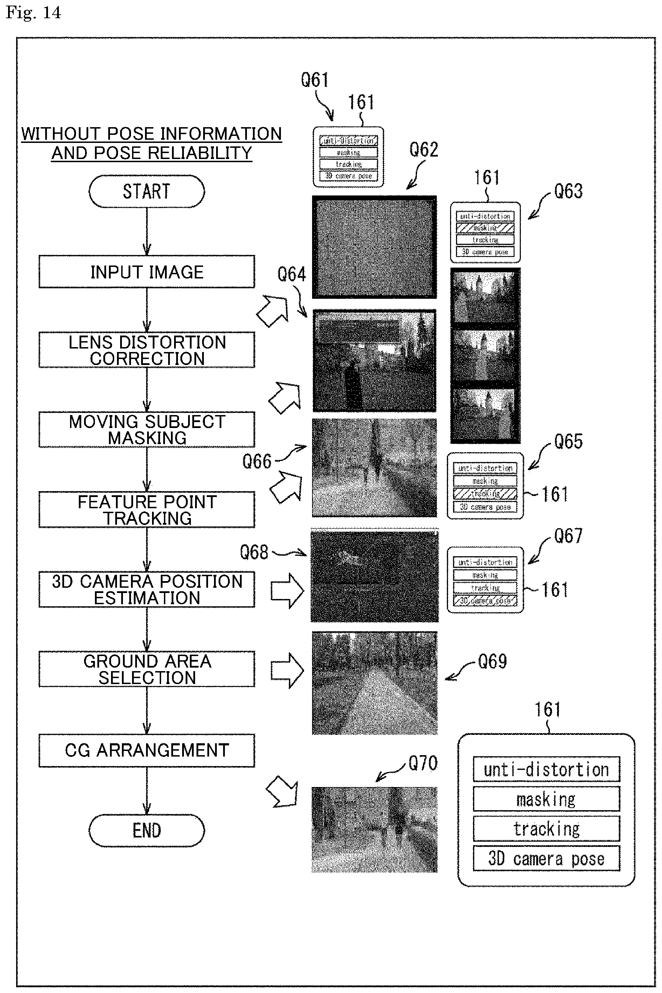

   Fig. 14 is a diagram showing a UI and a display screen when there is no pose information and pose reliability.
[Fig. 15]

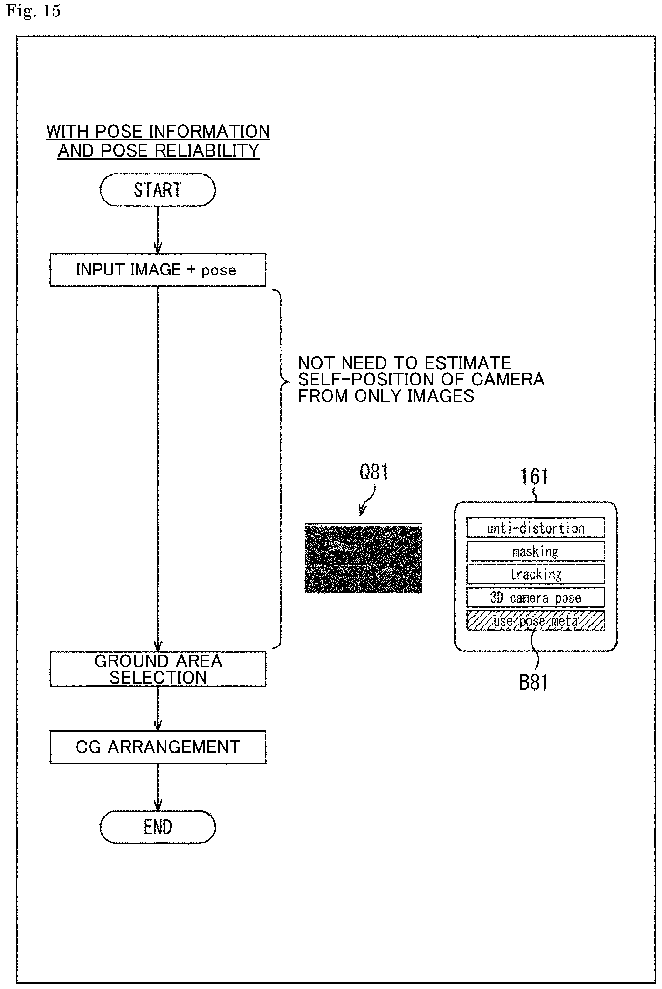

   Fig. 15 is a diagram showing a UI and a display screen when there is pose information and pose reliability.
[Fig. 16]

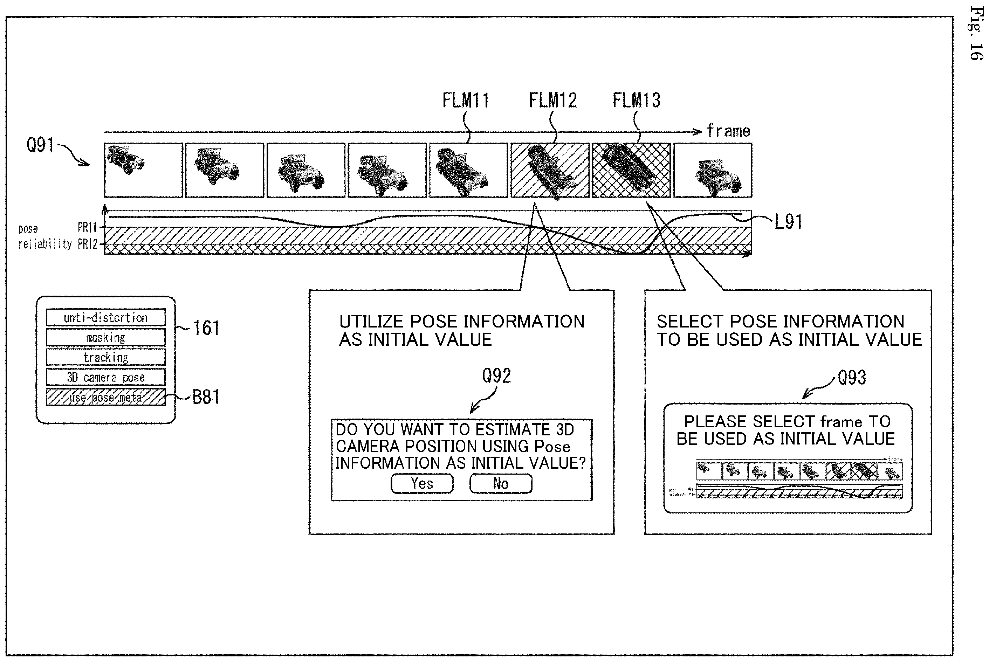

   Fig. 16 is a diagram explaining switching between using pose information as is or not.
[Fig. 17]

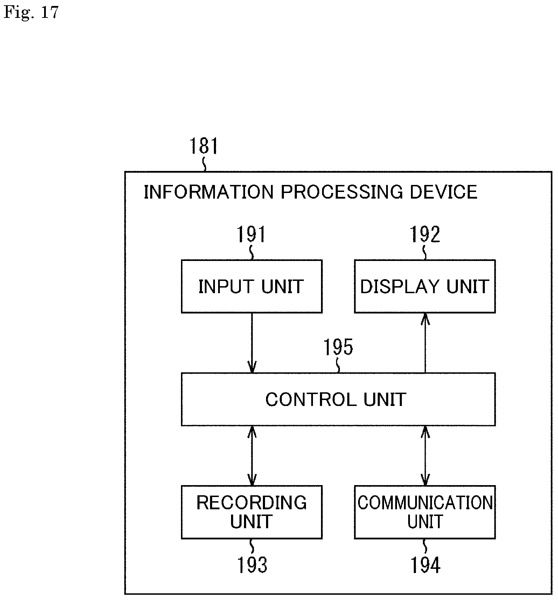

   Fig. 17 is a diagram illustrating a configuration example of an information processing device.
[Fig. 18]

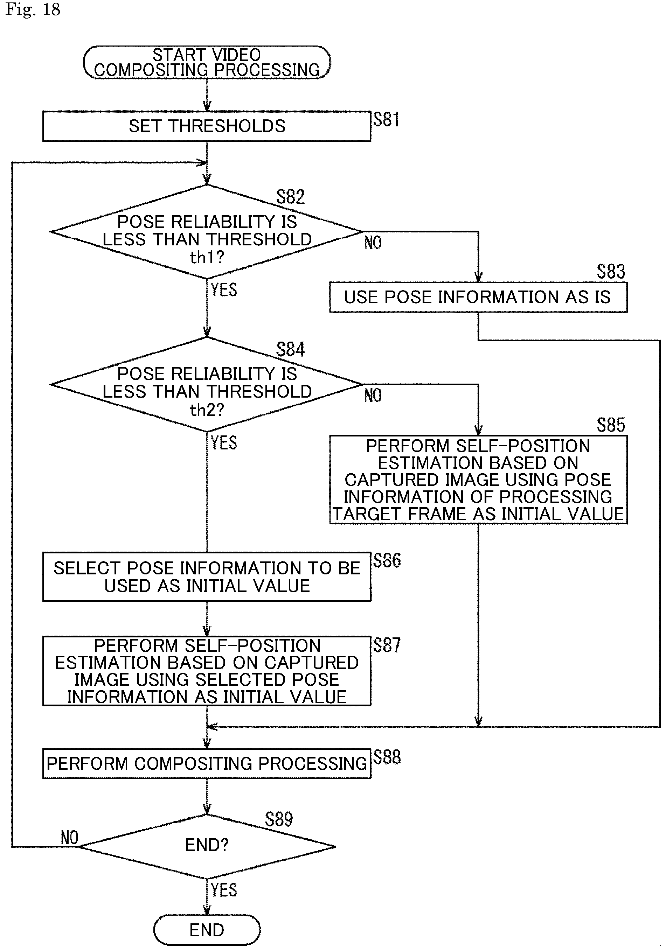

   Fig. 18 is a flowchart explaining video compositing processing.
[Fig. 19]

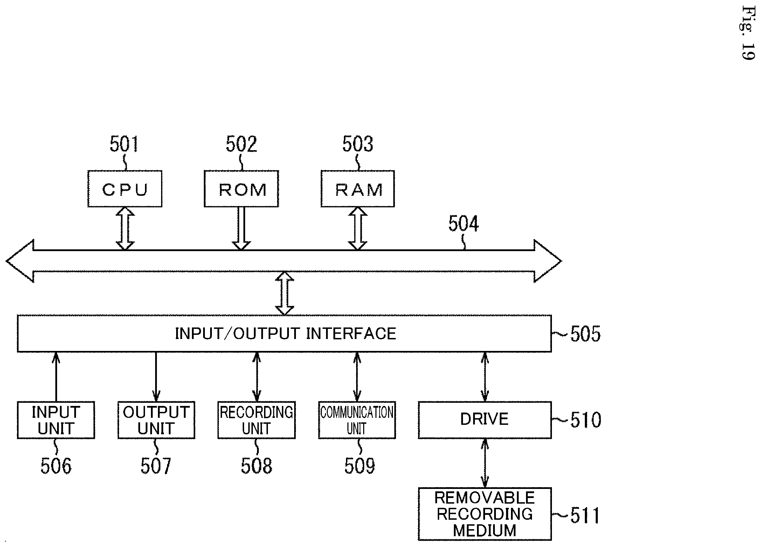

   Fig. 19 is a diagram illustrating a configuration example of a computer.

### [Description of Embodiments]

Embodiments to which the present technology is applied will be described below with reference to the accompanying drawings.

### <First Embodiment>

### <Capturing System and Video Content Production>

The present technology enables more efficient video production by associating an image captured by a camera, pose information of the camera indicating the result of self-position estimation, and pose reliability indicating the reliability of the pose information.

Note that the term "associate" here means, for example, that one data can be used (linked) when processing the other data. In other words, the form of the captured image, pose information, and pose reliability as data (files) is arbitrary.

For example, an image, pose information, and pose reliability may be composited into one data (file), or each may be separate data (file).

For example, the pose information and pose reliability associated with an image may be transmitted on a transmission path different from that of the image. In addition, for example, the pose information and pose reliability associated with an image may be recorded on a recording medium different from that of the image (or on a different recording area of the same recording medium). Naturally, the image, pose information, and pose reliability may be composited into one stream data or one file.

Furthermore, for example, the image, pose information, and pose reliability may be associated by assigning a single (identical) unique ID to them.

In addition, this "association" does not need to apply to the entire dataset but may also be applicable to parts of the data (or files). For example, if an image is a moving image consisting of a plurality of frames, the pose information and pose reliability may be associated with any unit such as a plurality of frames of the image or one frame.

In addition, in the present disclosure, "video" or "image" includes both still images and videos. Furthermore, "video" does not only refer to the state in which it is displayed on a display, and video data that is not displayed on a display may also be comprehensively referred to as "video". For example, in the embodiment, the background video before being displayed on the display and the video captured by the camera are not actually displayed videos but are video data, but are referred to as "background video" and "captured video" for convenience.

Now, a more specific embodiment of the present technology will be described below.

In particular, the following description will be given using the case in which the present technology is applied to a capturing system that performs capturing as a virtual production.

Fig. 1 is a diagram that shows a schematic diagram of a capturing system 11. This capturing system 11 is a system that performs capturing as a virtual production, and Fig. 1 shows some of the equipment arranged in the capturing studio.

The capturing studio is provided with a performance area 22 where a performer 21 performs acting or other types of performances. A large display device is positioned at least on the rear of the performance area 22, and further on its left and right sides, as well as on the top.

The type of display device is not limited, but Fig. 1 shows an example of using an LED wall 23 as an example of a large display device.

One LED wall 23 is formed by connecting and arranging a plurality of LED panels 24 vertically and horizontally. By arranging and connecting a plurality of LED panels 24 in this way, a large panel can be formed as the LED wall 23.

The size of the LED wall 23 is not particularly limited, but it may be a size necessary or sufficient for displaying the background when capturing the performer 21.

A required number of lights 25 are placed at required positions such as above and to the sides of the performance area 22 in the capturing studio, and the performance area 22 is illuminated by these lights 25.

A camera 26 is placed near the performance area 22, for example, to capture movies and other types of video content.

A cameraman 27 can move the position of the camera 26, and can also control the capturing direction, field of view, and the like of the camera 26.

Naturally, it is also conceivable that the camera 26 can be moved or the field of view can be controlled by remote control. The camera 26 may also move or change the field of view automatically or autonomously. For this application, the camera 26 may be mounted on a pan head or a moving body.

The camera 26 captures both the performer 21 in the performance area 22 and the video displayed on the LED wall 23 together (simultaneously).

For example, by displaying a landscape as the background video vB on the LED wall 23, it is possible to capture a video similar to that of the performer 21 actually being in the location of that landscape and performing acting.

An output monitor 28 is placed near the performance area 22. For example, the video captured by the camera 26 is displayed on this output monitor 28 in real time as a monitor video vM. This allows the director and staff producing the video content to check the video being captured by the camera 26.

As described above, the capturing system 11, which captures the performance of the performer 21 against the background of the LED wall 23 in a capturing studio, has various advantages over green screen capturing.

For example, when green screen capturing, it is difficult for the performer to imagine the background and the situation of the scene, which can affect the acting. By displaying the background video vB, the performer 21 can act more easily, improving the quality of the acting. It is also easy for the director and other staff to judge whether the acting of the performer 21 matches the background and the situation of the scene.

Furthermore, when capturing with the capturing system 11, post-production after capturing is more efficient than when green screen capturing.

This is because capturing with the capturing system 11 can sometimes eliminate the need for so-called chromakey compositing, and can sometimes eliminate the need for color correction and the compositing of reflections. Even if chromakey compositing is required, it is only necessary to display green or blue videos during capturing, so there is no need to add a physical background screen, which also helps to improve efficiency.

When green screen capturing, the performer's body, costume, and objects tend to have a green tint, which needs to be corrected. When green screen capturing, if the subject includes objects that reflect the surrounding scenery, such as glass, a mirror, or a snow globe, it is necessary to generate and composite the reflection images, which is a time-consuming task.

In contrast, when capturing with the capturing system 11 shown in Fig. 1, the green tint of the subject does not increase in the video captured by the camera 26, eliminating the need for correction. In addition, by displaying the background video vB, natural reflections on actual objects such as glass are captured, eliminating the need to composite the reflected videos.

Here, the background video vB will be described with reference to Figs. 2 and 3. In Figs. 2 and 3, parts corresponding to those in Fig. 1 are given the same reference numerals, and their explanations are omitted as appropriate.

Even if the background video vB is displayed on the LED wall 23 and captured along with the performer 21, the captured video will have an unnatural background if the background video vB is simply displayed as is. This is because a three-dimensional background with depth is represented as a flat background video vB.

For example, the camera 26 can capture the performer 21 in the performance area 22 from various directions and can also perform zoom operations. The performer 21 does not stand still in one place.

Then, the actual appearance of the background of the performer 21 should change depending on the position, capturing direction, field of view, and the like of the camera 26. However, such changes cannot be achieved with the background video vB when it is presented as a flat video. By changing the background video vB, the background appears similar to how it actually looks, including parallax.

Fig. 2 shows the camera 26 capturing the performer 21 from the left side of the figure, and Fig. 3 shows the camera 26 capturing the performer 21 from the right side of the figure.

In Figs. 2 and 3, the capturing area video vBC is shown in the background video vB.

Note that the part of the background video vB excluding the capturing area video vBC is called the "outer frustum," and the capturing area video vBC is called the "inner frustum". The background video vB described here refers to the entire video displayed as the background, including the capturing area video vBC (inner frustum).

The range of this capturing area video vBC (inner frustum) corresponds to the range actually captured by the camera 26 within the display surface of the LED wall 23. The capturing area video vBC is a video that expresses the scene that can be seen when the position of the camera 26 is the viewpoint, depending on the position, capturing direction, field of view, and the like of the camera 26.

Specifically, a video (image) obtained by preparing 3D background data, which is a 3D (three dimensions) model serving as the background, and sequentially rendering the 3D background data in real time based on the viewpoint position of the camera 26 is displayed in the capturing area video vBC.

Note that the range of the capturing area video vBC is actually a little wider than the range captured by the camera 26 at that time.

This is to prevent the outer frustum video from being reflected due to rendering delays when the captured range changes slightly due to panning, tilting, zooming, and the like of the camera 26, and to avoid the influence of diffracted light from the outer frustum video.

The capturing area video vBC rendered in real time in this way is composited with the outer frustum video.

The outer frustum video used in the background video vB may be rendered in advance on the basis of 3D background data, or may be rendered in real time for each frame or intermittent frame. The entire background video vB is generated by incorporating the video of the capturing area video vBC (inner frustum) into a part of the outer frustum video.

Note that the outer frustum video, like the inner frustum, may also be rendered for each frame. However, in this example, a static video is used, and in the subsequent explanation, the outer frustum video is primarily described as being rendered only for the first frame.

As a result, even if the camera 26 is moved back and forth, left and right, or zoomed, the background of the range captured together with the performer 21 will be captured as a video that corresponds to the change in the viewpoint position and FOV (Field of View) that accompanies the actual movement of the camera 26.

As shown in Figs. 2 and 3, the output monitor 28 displays a monitor video vM including the performer 21 and the background, and this monitor video vM is a video captured by the camera 26. The background in this monitor video vM is the capturing area video vBC. In other words, the background included in the captured video is a video that has been rendered in real time.

In the above-described capturing system 11, the background video vB is not merely displayed in a two-dimensional manner. Instead, the background video vB including the capturing area video vBC is changed in real time so that a video similar to that of an actual landscape can be captured.

Note that, instead of the entire background video vB displayed on the LED wall 23, only the capturing area video vBC as the range captured by the camera 26 may be rendered in real time to reduce the processing load of the system.

Here, the production process of video content as a virtual production using the capturing system 11 will be described.

As shown in Fig. 4, the video content production process is divided into three stages. That is, the video content production process mainly includes asset creation ST1, production ST2, and post-production ST3.

Asset creation ST1 is a process of creating 3D background data for displaying background video vB. As mentioned above, background video vB is generated by rendering in real time using 3D background data during capturing. For this application, 3D background data is created in advance as a 3D model.

Examples of methods for creating 3D background data include full CG (Computer Graphics), Point Cloud data scanning, and Photogrammetry.

Full CG is a method for creating 3D models using computer graphics. Full CG is the most labor-intensive and time-consuming method of the three methods, but it is suitable for use when unrealistic videos or videos that are difficult to capture are desired as background video vB.

Point cloud data scanning is a method of measuring distances from a certain position using, for example, LiDAR (Light Detection And Ranging), while also capturing 360-degree images from the same position using a camera, and generating a 3D model from point cloud data by overlaying the color data taken by the camera on the points measured by the LiDAR.

Point cloud data scanning can create 3D models in a shorter time than full CG. Point cloud data scanning also has the advantage of being easier to create high-resolution 3D models than photogrammetry.

Photogrammetry is a photogrammetry technique that analyzes parallax information from two-dimensional images obtained by capturing an object from a plurality of viewpoints to determine its dimensions and shape.

Photogrammetry can create 3D models in a short time. Note that point cloud information obtained by LiDAR may be used in generating 3D data using photogrammetry.

In asset creation ST1, for example, these methods are used to create a 3D model that will become 3D background data. Naturally, the above-mentioned methods may be used in combination. For example, parts of a 3D model created by point cloud data scanning or photogrammetry may be created in CG and then composited.

Production ST2 is a process in which capturing is performed in a capturing studio as shown in Fig. 1. Elemental techniques in this case include real-time rendering, background display, camera tracking, and lighting control.

As explained in Figs. 2 and 3, real-time rendering is a rendering process for obtaining the capturing area video vBC at each time point (each frame of the background video vB). This is a rendering process for rendering the 3D background data created in asset creation ST1 from a viewpoint that corresponds to the position of the camera 26 at each time point.

In this way, real-time rendering is performed to generate the background video vB for each frame including the capturing area video vBC, and the background video vB is displayed on the LED wall 23.

Camera tracking is performed to obtain meta information from the camera 26, and is a process of tracking the position information, capturing direction, field of view, and the like of the camera 26 at each time point.

By providing meta information including the position information, capturing direction, and field of view of the camera 26 at each time point to the rendering engine in correspondence with each frame, real-time rendering according to the viewpoint position of the camera 26 can be performed.

Meta information is information that is linked or associated with a video. The meta information is expected to include the position information of the camera 26 at each frame timing, the camera direction, field of view, focal length, F-number (aperture value), shutter speed, lens information, and the like.

The position information of the camera 26 and the information indicating the camera direction included in the meta information are pose information indicating the result of the self-position estimation described above, and the meta information also includes pose reliability indicating the reliability of the pose information.

Lighting control refers to controlling the lighting state in the capturing system 11, specifically, the light quantity, emission color, lighting direction, and the like of the light 25. For example, lighting control is performed according to the time setting and location setting of the scene to be captured.

Post-production ST3 indicates various processes performed after capturing. For example, in post-production ST3, video correction, video adjustment, clip editing, video effects, and the like are performed.

Video correction may involve color gamut conversion and color matching between cameras and materials. Video adjustment may involve color adjustment, brightness adjustment, contrast adjustment, and the like.

Clip editing may involve clip cutting, order adjustment, and time length adjustment, and video effects may involve compositing of CG videos and special effect videos.

### <Example of Configuration of Camera Surroundings>

Next, the configuration of the surroundings of the camera 26 in the capturing system 11 shown in Fig. 1 will be described.

In more detail, in the production ST2 and post-production ST3 of the video content production process shown in Fig. 4, the work indicated by arrow Q11 in Fig. 5 is performed.

That is, first, the capturing studio is set up by installing the LED wall 23, and then the camera 26 and output monitor 28 are arranged as a pre-setup.

Then, the video content is actually captured by the capturing system 11, and the video (image) obtained by capturing is checked.

Note that, hereinafter, a video (moving image), particularly a frame constituting a video which is a moving image, obtained by capturing with the camera 26 will also be referred to as a captured image.

The above-mentioned work from setup of the capturing studio to checking the video is carried out in the above-mentioned production ST2. Note that checking the video may also be carried out as a task in the post-production ST3.

After production ST2, the video (image) of the content obtained by capturing is sent out, and the sent-out video is edited (post-production) as the above-mentioned post-production ST3.

The upper part of Fig. 5 shows the configuration of the part of the capturing system 11 for capturing the video content, which is carried out as a task of production ST2.

The capturing system 11 is provided with a capturing processor 51 including a camera 26 as a configuration for capturing, and a CG generation processor 52 as a configuration for generating a capturing area video vBC (inner frustum).

The capturing processor 51 has a camera 26, a sensor unit 61, and a self-position estimation unit 62. The CG generation processor 52 is provided in a device such as a PC (Personal Computer) or a server, and realizes the above-mentioned rendering engine.

When capturing, the camera 26 captures a scene consisting of the capturing area video vBC (inner frustum) that is displayed on the LED wall 23 as the background and the real performer 21 that is the foreground. At this time, the sensor unit 61 and the self-position estimation unit 62 are used to obtain pose information of the camera 26.

The sensor unit 61 is attached to the camera 26 and is composed of an image sensor, a gyro sensor, a distance measurement sensor such as LiDAR, and a positioning sensor such as a GPS (Global Positioning System) sensor.

The sensor unit 61 performs sensing for estimating the self-position of the camera 26, and outputs the resulting sensor output signal to the self-position estimation unit 62.

The self-position estimation unit 62 performs self-position estimation based on the sensor output signal supplied from the sensor unit 61, and outputs the resulting pose information and pose reliability.

For example, the self-position estimation unit 62 may be a small device attached to the camera 26, or may be a device such as a PC or a server installed separately from the camera 26.

In addition, at least one of the sensor unit 61 and the self-position estimation unit 62 may be provided inside of the camera 26.

When capturing, the pose information and pose reliability obtained by the self-position estimation unit 62 are supplied to the CG generation processor 52 via, for example, Ethernet.

The CG generation processor 52 performs rendering processing based on the 3D background data prepared in advance and the pose information and pose reliability supplied from the capturing processor 51 (self-position estimation unit 62), and generates a capturing area video vBC.

More specifically, the field of view, focal length, F-number, and the like of the camera 26 are also supplied to the CG generation processor 52 and are used to generate the capturing area video vBC as necessary.

The CG generation processor 52 appropriately supplies the background video vB including the obtained capturing area video vBC to the LED wall 23 via a display controller (not shown) and displays it. This allows the capturing area video vBC to be displayed according to the position and capturing direction of the camera 26.

Furthermore, the captured image, pose information, and pose reliability are associated. In association, one or more pieces of pose information and pose reliability at each time may be associated with the entire captured image. For example, when the captured image is a moving image, each frame of the moving image may not match the acquisition timing of the pose information. In other words, the frames of the moving image may not be synchronized with the pose information. In this case, if the pose information and pose reliability at each time are associated with the entire moving image, pose information and pose reliability synchronized with each frame of the moving image can be obtained in a subsequent stage by interpolation processing or the like. Even when the captured image is a still image, pose information and pose reliability synchronized with the captured image can be obtained in the same manner as in the case of a moving image.

As a specific example of the association, for example, as shown on the right side of the figure, a video file containing a captured image and the pose information and pose reliability at the time of capturing the captured image is generated, and the obtained video file is supplied to a device such as a PC that performs processing such as video effects. In this case, for example, the captured image, pose information, and pose reliability are stored in the same video file, and the association is performed.

Note that the video file may be recorded in a memory and supplied to a device such as a PC, or may be supplied to a device such as a PC in a format conforming to any standard directly or via a network. Note that the captured image stored in the video file may be a RAW image, or may be a YC image consisting of a so-called luminance signal and a color difference signal obtained by performing a development process on the RAW image.

Here, self-position estimation and pose reliability will be described with reference to Fig. 6.

The self-position estimation of the camera 26 may be realized by any method, but for example, the self-position estimation unit 62 performs SLAM (Simultaneous Localization and Mapping) as the self-position estimation.

In SLAM, the location of the camera 26 is identified and the environmental map is created in parallel.

In this case, for example, a signal (image signal) of an image captured by an image sensor provided in the sensor unit 61 is supplied to the self-position estimation unit 62 as a sensor output signal.

The self-position estimation unit 62 estimates the three-dimensional positions of the feature points by analyzing the trajectories of the feature points included in the image based on the sensor output signal, and estimates the position and orientation of the camera 26, thereby obtaining pose information as a result. The self-position estimation unit 62 also creates an environmental map, which is a map of the surroundings, using the three-dimensional position information of the feature points extracted from the image.

In this way, when performing self-position estimation using an image signal as a sensor output signal, pose information (x, y, z, p, t, r) shown in the upper right of the figure is obtained. That is, as the pose information, the x-coordinate, y-coordinate, and z-coordinate indicating the spatial position of the camera 26, and the pan p, tilt t, and roll r, which are angles indicating the orientation of the camera 26, are obtained.

In this case, the pose information variance (Δx, Δy, Δz*,* Δp, Δt, Δr) and the inlier ratio can be used to calculate the pose reliability. These variances and inlier ratios are information obtained during the self-position estimation process.

The pose information variance is the variance of each element of the pose information, such as coordinates and angles, and the smaller this variance is, the higher (larger) the pose reliability can be.

The inlier ratio is the ratio between the total number of feature points extracted from the image and the feature points that are determined to be inliers, that is, the number of inliers, which is the number of feature points that are determined to be usable for self-position estimation, and the larger the inlier ratio is, the higher the pose reliability can be.

Furthermore, there is also a method of self-position estimation called Depth SLAM, which calculates pose information using a sensor output signal obtained from a distance measurement sensor, that is, the distance z from the distance measurement sensor to the subject obtained by distance measurement using the dTof (direct Time of Flight) method.

When obtaining pose information using such a method or when measuring the distance to the subject, the variance Δz of the distance z obtained during the self-position estimation process and the number of peaks (multimodality) of the distance z can be used to calculate the pose reliability, as shown in the lower right of the figure.

In other words, when obtaining pose information using the distance z, the distance measurement sensor measures distances a plurality of times in a relatively short period of time, so a histogram of the distance z, as indicated by arrow Q21, for example, is obtained. Then, the variance Δz of the distance z in the histogram can be used to calculate the pose reliability. In this case, the smaller the variance Δz, the higher (larger) the pose reliability can be.

In addition, the histogram of the distance z may have a plurality of peaks, as indicated by arrow Q22, for example, and the number of such peaks can be used to calculate the pose reliability. In this case, the smaller the number of peaks, the higher the pose reliability can be.

### <Example of Configuration of Capturing Processor>

Fig. 7 is a diagram showing a more detailed example of the configuration of the capturing processor 51.

In this example, the capturing processor 51 has a camera 26, a sensor unit 61, and a self-position estimation unit 62.

The camera 26 has a capturing unit 91, an ISP (Image Signal Processor) unit 92, a display unit 93, an input unit 94, and a control unit 95. The control unit 95 also has an SDI (Serial Digital Interface) output unit 101, a file output unit 102, and a pose superimposer 103.

The capturing unit 91 is made up of a fixed or interchangeable lens and an image sensor, and captures the performer 21, the capturing area video vBC, and the like as a subject, and supplies the resulting content video, that is, each frame (image) of the video, to the ISP unit 92.

The ISP unit 92 is made up of a processor and the like, and performs various types of image processing such as pixel defect correction and color separation processing on the image supplied from the capturing unit 91 as appropriate, and supplies the resulting captured image to the control unit 95. In particular, in this example, the captured image from the ISP unit 92 is supplied to the SDI output unit 101 and file output unit 102 of the control unit 95. When the captured image is a RAW image, some processing such as color separation processing is not performed.

The display unit 93 is, for example, an electronic viewfinder or a small display, and displays various images such as the captured image and menu images supplied from the control unit 95. The input unit 94 is, for example, a button or a switch, and supplies a signal to the control unit 95 in response to the operation of the user (cameraman 27).

The control unit 95 controls the operation of the entire camera 26. For example, the control unit 95 controls the capturing unit 91 to perform capturing, and supplies a through image based on the captured image supplied from the ISP unit 92 to the display unit 93 to display it.

The control unit 95 also has an SDI output unit 101, a file output unit 102, and a pose superimposer 103.

The SDI output unit 101 generates a video signal of the captured image conforming to the SDI format based on the captured image supplied from the ISP unit 92, and supplies it to the pose superimposer 103.

Note that, although the SDI format is used as an example here, any other format of video signal may be generated as the video signal for transmission.

The file output unit 102 generates a video signal of any format, such as a RAW video compression format, including the captured image supplied from the ISP unit 92, that is, a video file, and supplies it to the pose superimposer 103.

The pose superimposer 103 functions as an association unit that receives pose information and pose reliability from the self-position estimation unit 62 and associates the captured image, pose information, and pose reliability.

For example, the pose superimposer 103 outputs a video signal obtained by associating the captured image (video signal) in SDI format supplied from the SDI output unit 101 with the pose information and pose reliability supplied from the self-position estimation unit 62 to the subsequent stage of the camera 26.

In this case, the association with the captured image is performed by superimposing (embedding) the pose information and pose reliability in a predetermined period (section), such as a blanking period of the video signal in SDI format. Then, the video signal on which the pose information and pose reliability are superimposed is output from the pose superimposer 103.

At this time, the destination of the video signal of the captured image is, for example, the output monitor 28, a switcher, a PC, or other device. Alternatively, the video signal of the captured image may be output to a device such as a monitor for video confirmation installed outside of the capturing studio.

In addition, for example, the pose superimposer 103 outputs a video signal (video file) obtained by associating the captured image supplied from the file output unit 102 with the pose information and pose reliability supplied from the self-position estimation unit 62.

In this case, for example, the pose information and pose reliability are stored as metadata or the like in the video file of the captured image, thereby associating the captured image with the pose information. In this example, the destination of the video file is, for example, a removable recording medium mounted on the camera 26, or a device such as a PC for post-production connected to the camera 26 by a wired or wireless connection.

In addition, the captured image, pose information, and pose reliability may be associated with each other by a unique ID such as a UUID (Universally Unique Identifier) or a UMID (Unique Material IDentifier).

In such a case, for example, the same ID is assigned to the captured image, pose information, and pose reliability.

Then, for example, a file including the assigned ID and the captured image and another file including the assigned ID, pose information, and pose reliability different from the file may be generated. In addition, for example, the captured image with an assigned ID and the pose information and pose reliability with the same assigned ID may be transmitted (sent) separately to an external device such as a post-production PC.

Even in such a case, it is possible to correctly identify the captured image and the pose information and pose reliability associated with the captured image based on the assigned ID.

Moreover, the sensor unit 61 is attached to the camera 26. The sensor unit 61 may be detachable from the camera 26, or may be integral with the camera 26 and not detachable.

The sensor unit 61 has a sensor selector 121 and sensors 122-1 to 122-N.

The sensor selector 121 selects a sensor to be used for self-position estimation from among the N sensors 122-1 to 122-N, that is, a sensor suitable for self-position estimation, based on a control signal supplied from the self-position estimation unit 62.

The sensors 122-1 to 122-N are composed of, for example, an image sensor, a gyro sensor, a distance measurement sensor such as LiDAR, and a positioning sensor such as a GPS sensor, and perform sensing for self-position estimation of the camera 26, and output a resulting sensor output signal.

Note that, hereinafter, when there is no need to particularly distinguish between the sensors 122-1 to 122-N, they are also simply referred to as sensors 122.

For example, the sensor selector 121 can drive only the sensor 122 selected on the basis of the control signal from the self-position estimation unit 62 to perform sensing, and the sensor output signal obtained by sensing can be supplied to the self-position estimation unit 62.

Alternatively, the sensor selector 121 may cause all N sensors 122 to perform sensing, and only the sensor output signals of the sensors 122 selected from the N sensors 122 based on the control signal may be supplied to the self-position estimation unit 62.

By using the sensor selector 121 to select a sensor 122 suitable for performing self-position estimation, the self-position estimation unit 62 can perform self-position estimation more stably. In other words, more reliable pose information can be continuously obtained.

The self-position estimation unit 62 includes a self-position calculator 141, a UDP (User Datagram Protocol) transmitter 142, and a sensor controller 143.

The self-position calculator 141 is composed of, for example, a processor, and performs self-position estimation of the camera 26 based on the sensor output signals of one or more sensors 122 supplied from the sensor unit 61. That is, the pose information and pose reliability of the camera 26 are calculated by the self-position estimation.

The self-position calculator 141 supplies the pose information and pose reliability obtained by the self-position estimation to the pose superimposer 103 of the camera 26.

Furthermore, the self-position calculator 141 supplies the pose information and pose reliability to the UDP transmitter 142, and supplies the pose reliability to the sensor controller 143.

The UDP transmitter 142 transmits the pose information and pose reliability provided by the self-position calculator 141 to a device such as a PC connected to the self-position estimation unit 62 via a network by communication according to UDP.

For example, the destination of the pose information and pose reliability provided by the UDP transmitter 142 is a device provided with the CG generation processor 52 shown in Fig. 5.

The sensor controller 143 switches the sensor 122 used for self-position estimation, that is, switches the sensor output signal used for self-position estimation, based on the pose reliability provided by the self-position calculator 141.

Specifically, the sensor controller 143 selects the sensor 122 to be used for self-position estimation from the N sensors 122 provided in the sensor unit 61 based on the pose reliability, and supplies a control signal indicating the selection result to the sensor unit 61.

For example, the sensor controller 143 can select a predetermined sensor 122 at the start of capturing, and then reselect the sensor 122 (sensor output signal) when the pose reliability falls below a predetermined threshold, that is, switch the sensor 122.

In this case, it is possible to switch to a sensor 122 with a different sensing direction or type from the sensor 122 currently used for self-position estimation.

Specifically, for example, it is assumed that the N sensors 122 are image sensors with different capturing directions (sensing directions). In other words, it is assumed that the N sensors 122 are image sensors arranged facing in different directions.

Furthermore, it is assumed that the sensor 122-1 is selected, and self-position estimation is performed on the basis of the sensor output signal obtained by the sensor 122-1, but at a certain time point the pose reliability falls below a predetermined threshold.

In this case, the sensor controller 143 selects another sensor 122, such as the sensor 122-2, which is predetermined for the sensor 122-1, as a new sensor 122 to be used for self-position estimation, and outputs a control signal indicating the selection result.

For example, in a capturing studio, it is possible to identify in advance a direction (hereinafter also referred to as an inappropriate direction) of the subject, such as a ceiling or a wall, that may reduce the pose reliability of the self-position estimation, as seen from the camera 26 (sensor unit 61).

In addition, when a certain sensor 122 faces an inappropriate direction, it is also possible to identify in advance another sensor 122 that faces a direction (hereinafter also referred to as an appropriate direction) that provides a sufficiently high pose reliability as seen from the camera 26 (sensor unit 61), such as the direction of the output monitor 28.

Therefore, if other sensors 122 facing appropriate directions are specified in advance for each sensor 122 when the sensor 122 faces an inappropriate direction, it is possible to select an appropriate sensor 122 when the pose reliability decreases.

In addition, for example, it is assumed that some of the N sensors 122 are made of sensors of different types.

Furthermore, it is assumed that an image sensor is currently used as the sensor 122 to perform self-position estimation, but at some time point the pose reliability falls below a predetermined threshold.

In this case, the sensor controller 143 selects a sensor 122 made of a sensor of a type different from the image sensor, such as a distance measurement sensor, as a new sensor 122 to be used for self-position estimation, and outputs a control signal indicating the selection result.

In this way, even in capturing scenes that are challenging for image sensors, it is possible to perform self-position estimation with sufficient pose reliability by using other types of sensors such as a distance measurement sensor.

The sensor 122 used for self-position estimation may be selected on the basis of the sensor output signal. Here, an example will be described in which the sensor controller 143 selects the sensor 122 based on the pose reliability and supplies a control signal indicating the selection result to the sensor unit 61 (sensor selector 121). In this case, the sensor selector 121 selects the sensor 122 indicated by the control signal as the sensor 122 to be used for self-position estimation.

However, this is not limited to the above, and the sensor controller 143 may output the pose reliability as a control signal, and the sensor selector 121 may select the sensor 122 to be used for self-position estimation based on the pose reliability supplied as the control signal.

In addition, the sensor output signals of all N sensors 122 may be supplied to the self-position calculator 141 once. In such a case, the self-position calculator 141 performs the self-position estimation using the sensor output signal of the sensor 122 selected by the sensor controller 143 from among the N sensor output signals supplied.

A part or all of the above-described capturing processor 51 functions as an information processing device that associates the captured image, pose information, and pose reliability.

In this case, for example, a part or all of the configuration of the sensor unit 61 may be provided in the camera 26, or a part or all of the configuration of the self-position estimation unit 62 may be provided in the camera 26.

In addition, a part of the configuration of the camera 26, such as the pose superimposer 103, may be provided in the self-position estimation unit 62, or a part or all of the self-position estimation unit 62, the pose superimposer 103, and the like may be provided in the sensor unit 61.

### <Other Configuration Examples of self-position Estimation Unit>

Note that, as another example of association of pose information, it is also possible to associate the time code of the captured image with the pose information.

In such a case, for example, as shown in Fig. 8, it is conceivable to provide the self-position estimation unit 62 with a file generator 151 that associates the time code of the captured image with the pose information. Note that in Fig. 8, parts corresponding to those in Fig. 7 are indicated by the same reference signs, and description of those parts will be omitted as appropriate.

In the example of Fig. 8, the self-position estimation unit 62 has a self-position calculator 141, a UDP transmitter 142, a sensor controller 143, and a file generator 151. That is, the self-position estimation unit 62 shown in Fig. 8 is configured such that the self-position estimation unit 62 shown in Fig. 7 is further provided with a file generator 151.

The file generator 151 is supplied with the time code of the captured image from the control unit 95 of the camera 26, and also with pose information from the self-position calculator 141. The self-position calculator 141 may supply not only the pose information but also the pose reliability to the file generator 151.

The file generator 151 associates the time code with the pose information by generating a file in which the supplied time code and pose information are stored. When the file generator 151 generates a file containing the time code and pose information of the captured image, it outputs (supplies) the file to any output destination, such as a removable recording medium, a CG generation processor 52, a device such as a post-production PC, or a server constituting a cloud.

It can be said that the captured image and pose information are associated by generating such a file. The file may also store the pose reliability of the pose information, and the time code, pose information, and pose reliability may be associated with each other. Instead of the time code, information related to the time of the captured image, such as the frame number of the captured image, may be associated with the pose information. In addition, the association of the time code (captured image) and the pose information may be performed in any other way, such as by assigning a unique ID as described above.

### <Description of Data Output Processing>

Next, the operation of the capturing processor 51 will be described.

When the capturing processor 51 starts capturing images using the camera 26, the data output processing shown in Fig. 9 is performed. The data output processing by the capturing processor 51 will be described below with reference to the flowchart in Fig. 9.

In step S11, the control unit 95 acquires a captured image.

For example, when the capturing unit 91 captures an image, the ISP unit 92 processes the image output from the capturing unit 91, and outputs the resulting captured image.

The SDI output unit 101 and the file output unit 102 of the control unit 95 acquire the captured image output from the ISP unit 92 in this way. The SDI output unit 101 generates a captured image conforming to the SDI format, that is, a video signal of the captured image, and supplies it to the pose superimposer 103, and the file output unit 102 generates a video signal (video file) in a predetermined format and supplies it to the pose superimposer 103.

In addition, for example, in the capturing processor 51, sensing by the sensor 122 is also started simultaneously with the start of capturing by the camera 26.

The sensor selector 121 selects the sensor 122 to be used for self-position estimation from among the plurality of sensors 122 in response to a control signal supplied from the sensor controller 143, and supplies a sensor output signal obtained by the selected sensor 122 to the self-position calculator 141.

In step S12, the self-position calculator 141 acquires the sensor output signal obtained by one or more sensors 122, which is output from the sensor unit 61.

In step S13, the self-position calculator 141 performs self-position estimation based on the sensor output signal acquired in step S12. For example, in step S13, SLAM is performed as the self-position estimation, thereby obtaining pose information and pose reliability.

The self-position calculator 141 supplies the pose information and pose reliability obtained by the self-position estimation to the pose superimposer 103 and UDP transmitter 142 of the camera 26, and supplies the pose reliability to the sensor controller 143.

In step S14, the pose superimposer 103 outputs the captured image, pose information, and pose reliability in association with each other.

For example, the pose superimposer 103 embeds the pose information and pose reliability supplied from the self-position estimation unit 62 in the blanking period of the SDI format captured image supplied from the SDI output unit 101, thereby associating them, and outputs the resulting video signal.

By doing this, the pose information and pose reliability can be transmitted without making any changes to the existing transmission system, such as adding wiring, and the pose information and pose reliability can be utilized at the transmission destination.

Furthermore, for example, the pose superimposer 103 stores the pose information and pose reliability supplied from the self-position estimation unit 62 in the video file of the captured image supplied from the file output unit 102, thereby associating them with the captured image, and outputs the resulting video file. For example, the pose information and pose reliability are stored in the video file as metadata of the captured image.

In addition, for example, the UDP transmitter 142 transmits the pose information and pose reliability provided from the self-position calculator 141 to a device provided with the CG generation processor 52 by communication according to UDP. The CG generation processor 52 can perform rendering processing based on the 3D background data, the pose information, and the pose reliability to generate the capturing area video vBC.

In step S15, the sensor controller 143 controls the switching of the sensor 122 used for self-position estimation based on the pose reliability provided from the self-position calculator 141.

For example, if the pose reliability is equal to or greater than a predetermined threshold, the sensor controller 143 does not switch the sensor 122, but continues to use the sensor 122 currently in use. In other words, the sensor 122 currently in use is selected as the sensor 122 to be used for self-position estimation.

In contrast, the sensor controller 143 switches the sensor 122 when the pose reliability is less than a predetermined threshold. For example, the sensor controller 143 selects a sensor 122 that has been determined in advance as a sensor 122 to be switched to, instead of the sensor 122 currently in use.

The sensor controller 143 supplies a control signal indicating the sensor 122 to be switched to, to the sensor unit 61. Then, the sensor selector 121 switches the sensor 122 that outputs a sensor output signal to the self-position calculator 141 in response to the control signal from the sensor controller 143.

Note that, as described below, when performing processing according to the pose reliability, such as displaying a warning as necessary to notify that the pose reliability has decreased on the basis of the pose reliability using the CG generation processor 52 or the camera 26, it is not necessary for the sensor controller 143 to control the switching of the sensor 122. Conversely, when the sensor controller 143 controls the switching of the sensor 122, the CG generation processor 52, the camera 26, and the like do not necessarily need to perform processing according to the pose reliability, such as displaying a warning to notify that the pose reliability has decreased. In this case, the pose reliability does not need to be supplied to the camera 26 or the CG generation processor 52.

In step S16, the control unit 95 determines whether or not to end the process of outputting the captured image in association with the pose information and the pose reliability. For example, if the capturing of the captured image is completed, it is determined that the process is to be ended.

In a case where it is determined that the processing is not to be ended yet in step S16, then the processing returns to step S11, and the aforementioned processing is repeatedly performed.

In contrast, if it is determined in step S16 that the process is to be ended, each unit of the capturing processor 51 stops the process being performed, and the data output process is ended.

The captured image, pose information, and pose reliability associated in step S14 of the data output process are recorded in a removable recording medium by the pose superimposer 103 in the form of a video file or the like, or are transmitted from the pose superimposer 103 to a device such as a PC for post-production by communication. For example, the video file recorded in the removable recording medium is supplied to a device such as a PC for post-production.

In this manner, the capturing processor 51 performs self-position estimation when capturing a captured image, and outputs the captured image in association with the pose information and pose reliability obtained by self-position estimation.

By doing this, the pose information and pose reliability can be utilized during capturing and in post-production after capturing, enabling more efficient video production.

### <Utilization of Pose Reliability>

The pose reliability associated with the captured image can be utilized during and after capturing.

Specifically, for example, when the pose reliability is decreased during capturing, a warning indicating the decrease in pose reliability can be displayed to suppress the decrease in efficiency of capturing work.

In this case, the warning display can be displayed, for example, on the camera 26, the output monitor 28, the LED wall 23, and the like. The warning indicating the decrease in pose reliability is not limited to a visual display, but it can also be conveyed through sound or vibration, or a combination of one or more methods such as visual display, sound, and vibration.

In addition, for example, in post-production after capturing, when performing a compositing processing of CG videos as a video effect, the pose reliability can be used to determine whether or not to use the pose information as it is in the compositing processing.

Fig. 10 shows an example of compositing processing of CG videos as a video effect. The compositing processing can be performed during capturing or in post-production after capturing.

In this example, for example, a scene as indicated by arrow Q41 is produced as a video content. Here, there is a tree in the background, with the performer 21 and horse HR11 in front of the tree in the foreground. In particular, the horse HR11 is located in front of the performer 21.

When capturing such a scene, for example, as indicated by arrow Q42, a tree is displayed as the background on the LED wall 23 in the capturing studio, and the performer 21 performs acting in front of the LED wall 23. Then, the capturing area video vBC on the LED wall 23 and the performer 21 are captured by the camera 26 as the subjects.

At this time, for example, during capturing, the pose information is used to composite the CG video of the horse HR11 with the captured image obtained by the camera 26, and the resulting video can be displayed as the monitor video vM on the output monitor 28.

Such compositing processing may be performed in post-production after capturing, but by performing it during capturing, the capturing staff can check whether an intended video is obtained by looking at the monitor video vM on the output monitor 28.

As described above, the pose information and pose reliability associated with the captured image can be used during and after capturing.

In this case, for example, the threshold for the pose reliability may be changed depending on the application of the pose information, in other words, the application that uses the pose information. This makes it possible to more appropriately use the pose information and the pose reliability and to more efficiently produce the video.

The applications referred to here include, for example, captured images using the LED wall 23, green screen capturing, post-production, and the like. In post-production, the pose reliability can be used for different applications depending on the editing content, such as the compositing of a foreground CG video, and the capturing method, such as green screen capturing.

Fig. 11 shows examples of pose reliability thresholds according to the application. The pose reliability threshold is used, for example, to display a warning that notifies the user that the pose reliability has decreased.

In Fig. 11, the horizontal axis indicates time, that is, the time code of the captured image, and the vertical axis indicates the pose reliability.

In this example, for instance, the applications include foreground compositing and background compositing, and a warning is displayed when the pose reliability falls below a certain threshold.

The foreground compositing application here is a case where the pose information and pose reliability are used in a process of compositing a foreground CG video (AR) with a captured image in post-production.

The background compositing application is a case where the pose information and pose reliability are used in a process of compositing a background video during or after capturing, such as capturing using an LED wall 23 or green screen capturing. Specifically, the background compositing application is, for example, a case of generating the capturing area video vBC.

In Fig. 11, curve L11 indicates the pose reliability at each time. The line L12 indicates the threshold for the pose reliability for the foreground compositing application, and line L13 indicates the threshold for the pose reliability for the background compositing application.

Therefore, for example, when the pose information is used for the foreground compositing application, a warning is displayed when the pose reliability value shown in curve L11 falls below the threshold shown in line L12. Similarly, when the pose information is used for the background compositing application, a warning is displayed when the pose reliability value shown in curve L11 falls below the threshold shown in line L13.

When the background video and the foreground video are composited using the pose information, if the pose reliability decreases, that is, if the pose information becomes inaccurate, it becomes impossible to composite the videos in the correct positional relationship, causing imperfections in the composited video to become more noticeable.

In particular, when compositing a foreground video, imperfections in videos are more noticeable than when compositing a background video, so the required accuracy of pose information for foreground compositing is higher than that for background compositing. For this reason, the threshold for foreground compositing indicated by line L12 is set higher than the threshold for background compositing indicated by line L13.

Note that, even when compositing a foreground video, for example, the pose reliability threshold may be different for use during capturing and use during post-production after capturing. In such a case, it is conceivable to make the pose reliability threshold for capturing smaller than the pose reliability threshold for post-production.

The above-mentioned change (setting) of the pose reliability threshold according to the application may be performed on the application program side without requiring user operation, or may be performed by the user specifying the application program or the like.

For example, in a device such as a PC, when an application program is prepared for each application, the application program started on the device such as a PC sets the pose reliability threshold determined for the application corresponding to itself (the application program) as the pose reliability threshold.

A specific example of changing (setting) the pose reliability threshold is when, for example, the camera 26 or the CG generation processor 52 displays a warning depending on the result of comparing the pose reliability value with the threshold during capturing.

For example, when capturing of the content video starts, the control unit 95 of the camera 26 selects (sets) a threshold for the application of the pose information during capturing, such as background compositing, from among pose reliability thresholds prepared in advance for a plurality of applications. In other words, the control unit 95 switches the pose reliability threshold for determining whether or not to issue a warning depending on the application of the pose information.

In this case, the control unit 95 may select the threshold depending on the operation of the cameraman 27 on the input unit 94, or may select the threshold depending on the set mode and the like, without requiring the operation of the cameraman 27.

When the control unit 95 receives pose information and pose reliability from the self-position calculator 141, it compares the supplied pose reliability with the selected threshold, and when the pose reliability falls below the threshold, it displays a warning on the display unit 93 that the pose reliability has decreased.

By displaying such a warning, the cameraman 27 looking at the electronic viewfinder as the display unit 93 can notice capturing errors and the like at an early stage. In addition, the capturing staff and the like do not need to constantly check whether capturing errors or deterioration of video quality have occurred by looking at the monitor video vM on the output monitor 28. As a result, the efficiency of the capturing work can be improved.

In addition, for example, as in the case of the camera 26, the CG generation processor 52 may also select pose reliability threshold according to the application, and sequentially compare the selected threshold with the pose reliability supplied from the UDP transmitter 142.

In this case, when the pose reliability falls below the threshold, the CG generation processor 52 generates a background video vB in which a warning indicating that the pose reliability has decreased is superimposed on the outer frustum portion. Then, the CG generation processor 52 supplies the generated background video vB to the LED wall 23 via a display controller (not shown) or the like for display.

As a result, a warning is displayed in the portion of the background video vB outside of the capturing area video vBC, that is, the outer frustum portion, and capturing errors and the like are notified without affecting capturing, thereby improving the efficiency of capturing work.

In addition, for example, the pose reliability threshold used for controlling the switching of the sensor 122 by the sensor controller 143 of the self-position estimation unit 62 may also be selected (set) according to the application of the pose information.

In addition, as another specific example of changing (setting) the pose reliability threshold, for example, in post-production, a case where switching between using pose information as is and using pose information obtained through existing camera tracking can be considered.

For example, in post-production, when a compositing processing is performed to composite a CG video as a foreground or background with a captured image, the pose information of the camera 26 is required in the compositing processing to determine the compositing position of the CG video on the captured image.

At this time, if the pose reliability of the pose information obtained by the self-position estimation unit 62 is sufficiently high, the pose information can be used as is in the compositing processing.

However, if the pose reliability is low and the pose information is used as is in the compositing processing, the CG video will not be composited in the correct position or orientation, and the quality of the captured image after compositing will decrease.

Therefore, as shown in Fig. 12, for example, it is possible to switch between using the pose information as is in the compositing processing or using pose information obtained through existing camera tracking in the compositing processing according to the pose reliability. By doing so, a high-quality captured image can be obtained efficiently.

In Fig. 12, the horizontal axis indicates time, that is, the time code of the captured image, and the vertical axis indicates the pose reliability.

Curve L21 indicates the pose reliability at each time, and lines L22 and L23 indicate the thresholds for the pose reliability selected (set) on the basis of the foreground compositing application, which is the application during the compositing processing.

In particular, here, two thresholds are selected for the foreground compositing application. Note that here, an example will be described in which the thresholds indicated by lines L22 and L23 are set according to the application. However, one threshold, such as the threshold indicated by line L22, may be set according to the application, while the other threshold, such as the threshold indicated by line L23, may be constant regardless of the application.

For example, when the pose reliability indicated by curve L21 is equal to or greater than the threshold indicated by line L22, the pose information is sufficiently reliable, and the pose information associated with the captured image is used as is in the compositing processing.

In other words, in the section within region R21 where the pose reliability indicated by curve L21 is equal to or greater than the threshold indicated by line L22, the pose information is used as is in the compositing processing.

In this way, if the pose information is sufficiently reliable, the pose information associated with the captured image can be used directly in the compositing processing, and there is no need to obtain the pose information in post-production. This reduces the post-production processing time, enabling more efficient video production.

In addition, if the pose reliability is equal to or greater than the threshold indicated by line L23 but less than the threshold indicated by line L22, the pose information is not sufficiently reliable, and the final pose information is obtained through existing camera tracking. The pose information obtained through existing camera tracking is then used in the compositing processing.

In other words, in the section within region R22 where the pose reliability indicated by curve L21 is equal to or greater than the threshold indicated by line L23 and less than the threshold indicated by line L22, the pose information is obtained through existing camera tracking.

However, in this case, the pose information associated with the captured image is used as the initial value of the pose information to be obtained, and the existing camera tracking is performed.

The existing camera tracking here refers to a process of calculating pose information based only on the captured image, and such existing camera tracking is called match moving processing.

In match moving processing, an enormous amount of processing time is required to obtain pose information, because the user, who is the editor, needs to perform input operations such as specifying feature points, and it takes time for the process to converge. This reduces the work efficiency of post-production, that is, the production efficiency of the video.

Therefore, in the present technology, when the pose reliability is equal to or greater than the threshold indicated by line L23 and less than the threshold indicated by line L22, the pose information associated with the captured image is used as an initial value, and the pose information is calculated by match moving processing.

By doing this, not only can the match moving processing converge more quickly to obtain pose information in a short time, but more reliable pose information can also be obtained.

For example, if estimating pose information, that is, estimating the position and orientation of the camera 26, is started from the premise that there are no initial values, the search range for the solution becomes wide, so the process converges slowly and there is a high possibility that the estimation result of the pose information will be a local optimum.

In contrast, if pose information that is somewhat reliable is used as the initial value, the match moving processing converges quickly and the solution can be searched for locally, so that more reliable, that is, more probable pose information can be obtained.

In addition, for example, if the pose reliability indicated by curve L21 is less than the threshold indicated by line L23, the pose information associated with the captured image may not be reliable. For this reason, relatively reliable pose information from a time point prior to the current time is used as the initial value, and existing camera tracking is performed, and the resulting pose information is used for the compositing processing.

In other words, in the section within region R23 where the pose reliability indicated by curve L21 is less than the threshold indicated by line L23, the immediately preceding relatively reliable pose information is used as the initial value, and the final pose information is obtained through existing camera tracking.

In this case, the pose information to be used as the initial value is selected from the pose information from each time point prior to the current time, for example, indicated by curve L21.

The pose information to be used as the initial value may be specified by the user, or may be selected by the application program based on the pose reliability at each time point without requiring a user's specifying operation.

In this example, the pose information at the time point corresponding to point PI11 on curve L21, which is earlier in time than the time point where the pose reliability is less than the threshold indicated by line L23 and is equal to or greater than the threshold indicated by line L23, is selected as the initial value.

This is because, at the time point corresponding to point PIll, the pose reliability is equal to or greater than the threshold indicated by line L23, so the pose information at this time point is sufficiently reliable to be used as the initial value.

In this way, when pose information is obtained through existing camera tracking using relatively reliable pose information at a time point earlier than the current time point as the initial value, the match moving processing can converge more quickly and the processing load can be reduced compared to when existing camera tracking is performed without specifying an initial value.

As described above, in post-production, by utilizing the pose reliability to switch whether or not to use the pose information as is, video production can be performed more efficiently. In particular, by selecting a threshold for the pose reliability according to the application of the pose information, the pose information and pose reliability can be used more appropriately, and video production can be performed more efficiently.

Here, an example of the difference between the processing in post-production when there is pose information and pose reliability associated with a captured image and when there is not, that is, the difference between the processing when the pose information and pose reliability are used and when they are not, will be described.

Here, an example of post-production processing in which pose information is used to composite a CG video with a captured image will be described.

In such a case, when there is no pose information and pose reliability associated with a captured image, the processing is performed as shown, for example, on the left side of Fig. 13. In the example shown on the left side of Fig. 13, the above-mentioned match moving processing (existing camera tracking) is performed.

Specifically, when a captured image is input, lens distortion correction is performed on the captured image, and distortion of the captured image caused by the lens is corrected. This makes the captured image closer to the state when it is captured with an ideal lens without distortion, and allows for more accurate feature point tracking in the subsequent stage.

Then, moving subject masking is performed on the captured image after lens distortion correction. During the self-position estimation, the moving subject area in the captured image becomes noise, so the moving subject area is excluded from the estimation target area during self-position estimation by moving subject masking. At this time, the moving subject area is appropriately specified by the user.

After moving subject masking is performed, feature point tracking is performed on the captured image next, and the amount of movement (optical flow) of each area in the captured image is calculated.

If there is no pose information and pose reliability associated with the captured image, the above-mentioned processes from lens distortion correction to feature point tracking are performed as pre-processing for self-position estimation.

After pre-processing is performed, the amount of movement obtained by feature point tracking is used to perform the self-position estimation (3D camera position estimation) for the captured image.

Then, a ground area on the captured image is selected, and a CG video is composited on the basis of the selection result and the result of self-position estimation, that is, the CG video is arranged.

In contrast, when there is pose information and pose reliability associated with the captured image, the process is performed as shown on the right side of Fig. 13, for example.

That is, first, the captured image and the pose information and pose reliability associated with the captured image are input.

Then, a ground area on the input captured image is selected, and a CG video is composited (CG video is arranged) on the basis of the selection result and the input pose information.

When the captured image is associated with pose information and pose reliability, there is already pose information that is the result of self-position estimation, so there is no need to perform the pre-processing and self-position estimation shown in the example on the left side of the figure. In other words, there is no need to perform the self-position estimation of the camera 26 based only on the image.

This reduces the processing load and time in post-production, while also reducing user waiting time, improving the efficiency of video production.

In addition, examples of UI (User Interface) and display screen transitions when the process described with reference to Fig. 13 is performed are shown in Figs. 14 and 15.

Fig. 14 shows an example of a UI and a display screen when the process shown on the left side of Fig. 13 is performed when there is no pose information and pose reliability associated with the captured image.

In this case, for example, the UI 161 shown in the lower right of Fig. 14 is displayed on the display screen. This UI 161 has buttons with the text "unti-distortion", "masking", "tracking", and "3D camera pose".

After the captured image is input, when the button with the text "unti-distortion" on the UI 161 is operated as indicated by arrow Q61, lens distortion correction is performed, and lens distortion and the like are displayed on the display screen as appropriate as indicated by arrow Q62. If there is no lens change in the camera 26, this lens distortion correction only needs to be set once at the beginning.

Next, when the button on the UI 161 displaying the text "masking" is operated as indicated by arrow Q63, moving subject masking is performed, and the area of the moving subject on the captured image on the display screen is masked as indicated by arrow Q64.

Then, when the button on the UI 161 displaying the text "tracking" is operated as indicated by arrow Q65, feature point tracking is performed, and the result of the feature point tracking is displayed on the captured image on the display screen as indicated by arrow Q66.

Furthermore, when the button on the UI 161 displaying the text "3D camera pose" is operated as indicated by arrow Q67, self-position estimation is performed, and a screen related to pose information such as the result of self-position estimation is displayed on the display screen as indicated by arrow Q68.

After that, when the ground area is selected on the captured image displaying feature points and the like as indicated by arrow Q69, the CG video is placed on the captured image as indicated by arrow Q70.

In contrast, Fig. 15 shows an example of a UI and a display screen when processing is performed when there is pose information and pose reliability associated with a captured image, as shown on the right side of Fig. 13.

In the example of Fig. 15, when a captured image and pose information and pose reliability associated with the captured image are input, the UI 161 is displayed on the display screen. In this case, a button B81 with the text "use pose meta" is further displayed on the UI 161.

Then, when the button B81 on the UI 161 is operated, a screen related to the pose information associated with the captured image, that is, the result of self-position estimation obtained together with the captured image, is displayed on the display screen, as indicated by arrow Q81.

After that, as in the case of Fig. 14, when a ground area is selected on the captured image on which feature points and the like are displayed, a CG video is arranged on the captured image.

In addition, when the pose information and pose reliability associated with the captured image are used as shown in Fig. 15, the pose reliability associated with the captured image may be low, and the pose information may not be sufficiently reliable.

In such a case, depending on the pose reliability, the pose information may be used as is for the compositing processing (arrangement of CG videos) or the pose information may be obtained through existing camera tracking and used for the compositing processing. In other words, the switching described with reference to Fig. 12 may be performed.

Specifically, for example, as shown in Fig. 16, when the button B81 with the text "use pose meta" on the UI 161 displayed on the display screen is operated, a threshold according to the application of the pose information is selected on the device (application program) side, and the threshold and the pose reliability are compared.

For example, as indicated by arrow Q91, assume that a series of captured images of a plurality of frames and the pose information and pose reliability associated with each of the captured images are input.

The captured images of each frame are shown above the part indicated by arrow Q91, and the pose reliability of each frame (captured image) is shown below the part indicated by arrow Q91. In particular, curve L91 shows the pose reliability of each frame, and the vertical and horizontal axes show the pose reliability and the frame (time).

In this example, as shown on the vertical axis in the figure, a larger threshold PR11 and a smaller threshold PR12 are selected (set) as the pose reliability threshold according to the application. Note that the threshold PR12 may be a constant value regardless of the application.

When the thresholds PR11 and PR12 are selected, the pose reliability associated with the captured images is compared with the selected thresholds PR11 and PR12, starting from the first frame.

At this time, if the pose reliability is equal to or greater than the threshold PR11, as in the case of frame FLM11, the pose information associated with the captured image is selected as the pose information to be used in the compositing processing (arrangement of CG videos).

In addition, if the pose reliability is equal to or greater than the threshold PR12 and less than the threshold PR11, as in the case of frame FLM12, a dialogue (confirmation window) indicated by arrow Q92 is displayed on the display screen.

This dialogue displays a text message asking whether to perform self-position estimation using the pose information as the initial value, that is, existing camera tracking (match moving processing), and buttons for responding (answering) to the text message.

For example, if the user operates the button on the dialogue displaying the text "Yes" indicating that existing camera tracking will be performed, existing camera tracking will be performed accordingly.

In other words, the pose information associated with the captured image of frame FLM12 is used as the initial value, match moving processing is performed on the basis of the captured image, and the resulting pose information is used as the pose information to be used in the compositing processing (arrangement of CG videos).

Furthermore, when the pose reliability falls below the threshold PR12, as in the case of frame FLM13, for example, a message is displayed prompting the user to select a frame to be used as the initial value, as indicated by arrow Q93. At this time, a cursor for selecting a frame of pose information to be used as the initial value is displayed in the portion of the display screen where the captured image and pose reliability of each frame are displayed, and the user moves the cursor to select the desired frame. In other words, the pose information to be used as the initial value is selected by the user.

Then, the pose information associated with the captured image in the frame selected by the user is used as the initial value, and match moving processing based on the captured image is performed. The resulting pose information is used as the pose information to be used in the compositing processing (arrangement of CG videos).

Even when switching between using the pose information as is and not, the user only needs to perform an operation on the dialogue, and post-production work can be carried out efficiently.

### <Configuration Example of Information Processing Device>

The above-mentioned post-production processing is performed in an information processing device such as a PC. Fig. 17 shows a configuration example of such an information processing device.

An information processing device 181 shown in Fig. 17 performs processing based on the captured image, pose information, and pose reliability that are associated in advance and are supplied directly or indirectly from the camera 26 as post-production processing. The processing referred to here is processing that is performed after the above-mentioned captured image is input, such as processing to calculate appropriate pose information and processing to composite CG videos (images) on the captured image.

The information processing device 181 has an input unit 191, a display unit 192, a recording unit 193, a communication unit 194, and a control unit 195.

The input unit 191 is made up of a mouse, a keyboard, and the like, and supplies signals to the control unit 195 according to user operations. The display unit 192 is made up of a display, and the like, and displays various images such as captured images and screens for compositing CG videos under the control of the control unit 195.

The recording unit 193 is made up of, for example, a non-volatile memory, and records various types of data such as captured images and application programs for each application supplied from the control unit 195, and supplies the recorded data to the control unit 195 as necessary.

The communication unit 194 communicates with external devices. For example, the communication unit 194 transmits data provided by the control unit 195 to an external device or receives any data, such as a video file in which a captured image, pose information, and pose reliability are associated and stored, from an external device and provides the data to the control unit 195.

The control unit 195 controls the operation of the entire information processing device 181.

For example, the control unit 195 switches the pose reliability threshold according to the application of the pose information, and calculates pose information by self-position estimation (match moving processing) based on the captured image as appropriate according to the comparison result between the threshold after switching and the pose reliability. In addition, for example, the control unit 195 also performs processing such as compositing a CG video (image) on the captured image according to a signal from the input unit 191.

### <Description of Video Compositing Processing>

Next, the operation of the information processing device 181 will be described.

For example, in the information processing device 181, a video file in which a captured image, pose information, and pose reliability are associated and stored is acquired from the camera 26 in advance and recorded in the recording unit 193.

In this state, in order to execute a process of compositing a CG video with a captured image as a post-production process, the user operates the input unit 191 to instruct the start of a dedicated post-production application program.

Then, the control unit 195 reads the specified application program from the recording unit 193 and starts it.

Furthermore, for example, the control unit 195 reads the specified video file from the recording unit 193 in response to a user's operation, and appropriately displays the UI 161 shown in Fig. 16 on the display unit 192. In this state, when the user operates the button B81 on the UI 161 on which the text "use pose meta" is displayed, the information processing device 181 performs the image compositing processing shown in Fig. 18 as a process of compositing a CG video with a captured image.

The video compositing processing by the information processing device 181 will be described below with reference to the flowchart in Fig. 18.

In step S81, the control unit 195 sets a threshold according to the application, such as the post-production described above.

For example, the control unit 195 selects a larger threshold th1 and a smaller threshold th2 than the threshold th1, which are predefined for the started application program, as the pose reliability threshold according to the application.

The thresholds th1 and th2 correspond to the thresholds PR11 and PR12 described with reference to Fig. 16, for example.

The control unit 195 also performs the following process on each frame of the video of the content stored in the video file read from the recording unit 193 in order as the frame to be processed.

In step S82, the control unit 195 determines whether the pose reliability of the frame to be processed is less than the threshold th1.

If it is determined in step S82 that the pose reliability is not less than the threshold th1, that is, that the pose reliability is equal to or greater than the threshold th1, the pose information associated with the captured image is sufficiently reliable, and the processing then proceeds to step S83.

In step S83, the control unit 195 selects the pose information associated with the captured image of the frame to be processed as the pose information to be used in the CG video compositing processing. After the processing of step S83 is performed, the processing then proceeds to step S88.

If it is determined in step S82 that the pose reliability is less than the threshold th1, then in step S84, the control unit 195 determines whether the pose reliability of the frame to be processed is less than the threshold th2.

If it is determined in step S84 that the pose reliability is not less than the threshold th2, that is, that the pose reliability is equal to or greater than the threshold th2 and less than the threshold th1, the processing then proceeds to step S85.

In this case, the pose information associated with the captured image is reliable to a certain extent, but is not sufficiently reliable, so the processing of step S85 is performed. At this time, the control unit 195 appropriately displays a dialog on the display unit 192 to select whether to perform self-position estimation with the pose information as the initial value, and performs the processing of step S85 in response to the user's operation on the dialog.

In step S85, the control unit 195 performs self-position estimation based on the captured image using the pose information associated with the captured image of the frame to be processed as the initial value. Here, the above-mentioned match moving processing is performed as the self-position estimation.

The control unit 195 sets the pose information obtained by self-position estimation as the final pose information to be used in the compositing processing of the CG video, and then the processing proceeds to step S88.

If it is determined in step S84 that the pose reliability is less than the threshold th2, the processing of step S86 is then performed.

In this case, the pose information associated with the captured image is highly likely to be unreliable. Therefore, for example, the control unit 195 appropriately displays a cursor or a text message for selecting a frame of pose information to be used as an initial value on the display unit 192, and prompts the user to select a frame (pose information). Then, the user operates the input unit 191 to select a frame of pose information to be used as an initial value from among frames temporally preceding the frame to be processed.

Then, in step S86, the control unit 195 selects a frame of pose information to be used as an initial value, that is, the pose information to be used as an initial value, in response to a signal supplied from the input unit 191 by the user's operation. The pose information used as the initial value here is pose information previously associated with the captured image.

In step S87, the control unit 195 uses the pose information of the frame selected in step S86 as the initial value to perform self-position estimation based on the captured image. Here, the above-mentioned match moving processing is performed as the self-position estimation.

The control unit 195 sets the pose information obtained by the self-position estimation as the final pose information to be used in the CG video compositing processing, and then the processing proceeds to step S88.

After the processing of step S83, the processing of step S85, or the processing of step S87 is performed, the processing of step S88 is performed.

In step S88, the control unit 195 performs compositing processing to composite a predetermined CG video on the captured image of the frame to be processed on the basis of the pose information to be used in the CG video compositing processing. At this time, the selection result of the ground area and the like is used as appropriate.

Note that if the user has not instructed the compositing of CG video in the frame to be processed, the processing of step S88 is not performed.

In step S89, the control unit 195 determines whether or not to end the process of compositing CG video with the captured image. For example, in step S89, it is determined to end the processing when all frames have been processed as the processing target.

In a case where it is determined that the processing is not to be ended yet in step S89, then the processing returns to step S82, and the aforementioned processing is repeatedly performed. That is, a new frame is processed, and the CG video is composited with the captured image of that frame.

In contrast, if it is determined in step S89 that the process is to end, each unit of the information processing device 181 stops the process being performed, and the video compositing processing ends.

In this way, the information processing device 181 compares the threshold set for each application of the pose information with the pose reliability, obtains pose information according to the comparison result, and composites the CG video with the captured image.

In the information processing device 181, by using the pose information and pose reliability associated with the captured image in advance, the post-production processing time can be reduced and video production can be performed more efficiently.

Moreover, by selecting (setting) the threshold for the pose reliability according to the application of the pose information, the pose information and pose reliability can be more appropriately utilized and video production can be performed more efficiently.

Note that here, the processing based on the pose reliability is described as an example of the processing performed in post-production, where a CG video is composited with a captured image. However, this is not limited to this, and various processing can be performed on the basis of the pose reliability associated with the captured image, such as a warning display that notifies of a decrease in pose reliability during capturing, and the like.

### <Configuration Example of Computer>

The series of processing can be performed by hardware or software. In the case where the series of processing is executed by software, a program that configures the software is installed on a computer. Here, the computer includes, for example, a computer built in dedicated hardware, a general-application personal computer on which various programs are installed to be able to execute various functions, and the like.

Fig. 19 is a block diagram illustrating a configuration example of computer hardware that performs the above-described series of processing using a program.

In the computer, a CPU (Central Processing Unit) 501, a ROM (Read Only Memory) 502, and a RAM (Random Access Memory) 503 are connected to each other by a bus 504. The computer may also be provided with a GPU (Graphics Processing Unit).

An input/output interface 505 is further connected to the bus 504. An input unit 506, an output unit 507, a recording unit 508, a communication unit 509, and a drive 510 are connected to the input/output interface 505.

The input unit 506 includes a keyboard, a mouse, a microphone, and an imaging element. The output unit 507 includes a display and a speaker. The recording unit 508 includes a hard disk and a nonvolatile memory. The communication unit 509 includes a network interface. The drive 510 drives a removable recording medium 511, for example, a magnetic disk, an optical disc, a magnetooptical disk, or a semiconductor memory.

In the computer configured thus, the CPU 501 loads, for example, a program recorded in the recording unit 508 into the RAM 503 through the input/output interface 505 and the bus 504 and executes the program, so that the series of processing is performed.

The program to be executed by the computer (the CPU 501) can be provided in such a manner as to be recorded on, for example, the removable recording medium 511 serving as a packaged medium. The program can also be provided through a wired or wireless transmission medium such as a local area network, the Internet, or digital satellite broadcasting.

In the computer, the program can be installed on the recording unit 508 through the input/output interface 505 by loading the removable recording medium 511 into the drive 510. Furthermore, the program can be received by the communication unit 509 through a wired or wireless transfer medium and installed on the recording unit 508. In addition, the program can be installed in advance on the ROM 502 or the recording unit 508.

Note that the program executed by a computer may be a program that performs processing in time series in order described in the present specification or may be a program that performs processing in parallel or at a necessary timing such as when a called is made.

Embodiments of the present technology are not limited to the above-described embodiments and can be changed in various ways within the scope of the present technology without departing from the gist of the present technology.

For example, the present technology may be configured as cloud computing in which a plurality of devices shares and cooperatively processes one function via a network.

In addition, each step described in the above-mentioned flowchart can be executed by one device or executed in a shared manner by a plurality of devices.

Furthermore, when a single step includes a plurality of processes, the plurality of processes included in the single step can be executed by a single device, or in a distributed manner by a plurality of devices.

The present technology can also be configured as follows.

(1) An information processing device including an association unit that associates a captured image captured by a camera, pose information of the camera obtained by self-position estimation, and pose reliability of the pose information.
(2) The information processing device according to (1), further including a self-position calculator that performs the self-position estimation based on a sensor output signal of one or more sensors.
(3) The information processing device according to (2), further including a sensor controller that switches the sensor output signal used for the self-position estimation based on the pose reliability.
(4) The information processing device according to (3), wherein the sensor controller switches the sensor output signal used for the self-position estimation to the sensor output signal of the sensor with a different sensing direction.
(5) The information processing device according to (3), wherein the sensor controller switches the sensor output signal used for the self-position estimation to the sensor output signal of the sensor of a different type.
(6) The information processing device according to any one of (1) to (5), further including a control unit that issues a warning depending on the pose reliability.
(7) The information processing device according to (6), wherein the control unit switches a threshold for the pose reliability for determining whether to issue the warning depending on an application of the pose information.
(8) The information processing device according to any one of (1) to (7), wherein the association unit performs the association by storing the captured image, the pose information, and the pose reliability in the same file.
(9) The information processing device according to any one of (1) to (7), wherein the association unit performs the association by embedding the pose information and the pose reliability in a predetermined section of a signal of the captured image.
(10) The information processing device according to any one of (1) to (7), wherein the association unit performs the association by assigning the same ID to the captured image, the pose information, and the pose reliability.
(11) The information processing device according to any one of (1) to (10), wherein the captured image is a moving image.
(12) A program for causing a computer to execute processing including the step of associating a captured image captured by a camera, pose information of the camera obtained by self-position estimation, and pose reliability of the pose information.
(13) An information processing device including a control unit that performs processing based on a captured image captured by a camera, pose information of the camera obtained by self-position estimation, and pose reliability of the pose information, which are associated in advance.
(14) The information processing device according to (13), wherein the control unit switches a threshold for the pose reliability depending on an application of the pose information, and performs processing according to a comparison result between the pose reliability and the threshold.
(15) The information processing device according to (14), wherein the control unit calculates the final pose information by self-position estimation based on the captured image when the pose reliability is less than the threshold.
(16) The information processing device according to (15), wherein the control unit uses the pose information as an initial value and calculates the final pose information by self-position estimation based on the captured image when the pose reliability is less than the threshold.
(17) The information processing device according to (15) or (16), wherein the control unit calculates the final pose information by self-position estimation based on the captured image using the pose information of another frame before the frame to be processed as an initial value when the pose reliability of the frame to be processed is less than another threshold smaller than the threshold.
(18) The information processing device according to any one of (13) to (17), wherein the control unit composites another image with the captured image based on the pose information.
(19) The information processing device according to any one of (13) to (18), wherein the captured image is a moving image.
(20) A program that causes a computer to execute processing including the step of performing processing based on a captured image captured by a camera, pose information of the camera obtained by self-position estimation, and pose reliability of the pose information, which are associated in advance.

### [Reference Signs List]

11 Capturing system
23 LED wall
26 Camera
28 Output monitor
51 Capturing processor
52 CG generation processor
61 Sensor unit
62 Self-position estimation unit
95 Control unit
103 Pose superimposer
121 Sensor selector
122-1 to 122-N, 122 Sensor
141 Self-position calculator
143 Sensor controller

## Claims

1. An information processing device comprising an association unit that associates a captured image captured by a camera, pose information of the camera obtained by self-position estimation, and pose reliability of the pose information.

2. The information processing device according to claim 1, further comprising a self-position calculator that performs the self-position estimation based on a sensor output signal of one or more sensors.

3. The information processing device according to claim 2, further comprising a sensor controller that switches the sensor output signal used for the self-position estimation based on the pose reliability.

4. The information processing device according to claim 3, wherein the sensor controller switches the sensor output signal used for the self-position estimation to the sensor output signal of the sensor with a different sensing direction.

5. The information processing device according to claim 3, wherein the sensor controller switches the sensor output signal used for the self-position estimation to the sensor output signal of the sensor of a different type.

6. The information processing device according to claim 1, further comprising a control unit that issues a warning depending on the pose reliability.

7. The information processing device according to claim 6, wherein the control unit switches a threshold for the pose reliability for determining whether to issue the warning depending on an application of the pose information.

8. The information processing device according to claim 1, wherein the association unit performs the association by storing the captured image, the pose information, and the pose reliability in the same file.

9. The information processing device according to claim 1, wherein the association unit performs the association by embedding the pose information and the pose reliability in a predetermined section of a signal of the captured image.

10. The information processing device according to claim 1, wherein the association unit performs the association by assigning the same ID to the captured image, the pose information, and the pose reliability.

11. The information processing device according to claim 1, wherein the captured image is a moving image.

12. A program for causing a computer to execute processing including the step of associating a captured image captured by a camera, pose information of the camera obtained by self-position estimation, and pose reliability of the pose information.

13. An information processing device including a control unit that performs processing based on a captured image captured by a camera, pose information of the camera obtained by self-position estimation, and pose reliability of the pose information, which are associated in advance.

14. The information processing device according to claim 13, wherein the control unit switches a threshold for the pose reliability depending on an application of the pose information, and performs processing according to a comparison result between the pose reliability and the threshold.

15. The information processing device according to claim 14, wherein the control unit calculates the final pose information by self-position estimation based on the captured image when the pose reliability is less than the threshold.

16. The information processing device according to claim 15, wherein the control unit uses the pose information as an initial value and calculates the final pose information by self-position estimation based on the captured image when the pose reliability is less than the threshold.

17. The information processing device according to claim 15, wherein the control unit calculates the final pose information by self-position estimation based on the captured image using the pose information of another frame before the frame to be processed as an initial value when the pose reliability of the frame to be processed is less than another threshold smaller than the threshold.

18. The information processing device according to claim 13, wherein the control unit composites another image with the captured image based on the pose information.

19. The information processing device according to claim 13, wherein the captured image is a moving image.

20. A program that causes a computer to execute processing including the step of performing processing based on a captured image captured by a camera, pose information of the camera obtained by self-position estimation, and pose reliability of the pose information, which are associated in advance.
